# EUROPEAN PATENT APPLICATION

(11) **EP 4 503 612 A1**
(43) Date of publication of application: **05.02.2025**
(21) Application number: 23774498.2
(22) Date of filing: 07.03.2023
(51) Int. Cl.: H04N 19/85, H04N 19/46

(54) **INFORMATION PROCESSING DEVICE AND METHOD**

(30) Priority: 25.03.2022 JP 2022049960
(71) Applicant: Sony Group Corporation, Tokyo 108-0075 (JP)
(72) Inventor: HAYASHI, Kao, Tokyo 108-0075 (JP); KUMA, Satoru, Tokyo 108-0075 (JP); KATO, Tsuyoshi, Tokyo 108-0075 (JP)
(74) Representative: D Young & Co LLP
(86) International application number: PCT/JP2023/008455
(87) International publication number: WO 2023/181899

(57) **Abstract**

The present disclosure relates to an information processing device and a method that enables degradation of coding efficiency to be curbed while curbing degradation of subjective image quality.

Low-definition vertex connection information with a lower definition than that of a target mesh is generated, meta information including the low-definition vertex connection information is coded, a geometry image is generated by arranging patch images of a target mesh in frame images, and the geometry image is coded. Also, coded data of the meta information including the low-definition vertex connection information is decoded, coded data of the geometry image is decoded, the patch images are reconfigured using the low-definition vertex connection information and the geometry image, polygons of the reconfigured patch images are subdivided, and the mesh is reconfigured using the subdivided patch images. The present disclosure can be applied to, for example, an information processing device, an electronic device, an information processing method, a program, or the like.

## Description

### [Technical Field]

The present disclosure relates to an information processing device and a method, and particularly, to an information processing device and a method that make it possible to curb degradation of coding efficiency while curbing degradation of subjective image quality.

### [Background Art]

In the related art, a mesh is 3D data that expresses an object with a three-dimensional shape. As a method for compressing a mesh, a method of expanding video-based point cloud compression (VPCC) (see NPL 1, for example) and compressing a mesh has been proposed (see NPL 2, for example).

### [Citation List]

### [Non Patent Literature]

[NPL 1]
   "ISO/IEC FDIS 23090-5 Visual Volumetric Video-based Coding and Video-based Point Cloud Compression", ISO/IEC JTC 1/SC 29/ WG 11 N19579, September 21, 2020
[NPL 2]
   Danillo Graziosi, Alexandre Zaghetto, Ali Tabatabai, "[VPCC] [EE2.6-related] Mesh Patch Data", ISO/IEC JTC 1/SC 29/WG 7 m 55368, October 2020

### [Summary]

### [Technical Problem]

However, in the case of this method, it is necessary to code vertex connection information related to vertexes and connections of the mesh separately from a geometry image, a texture image, and the like. There is thus a concern that the mesh coding efficiency may be degraded. Although it is possible to reduce the amount of coding of the vertex connection information by reducing the number of vertexes of the mesh, there is a concern that definitions of the geometry and the texture may be degraded and subjective image quality may be degraded in the reconfigured mesh.

The present disclosure was made in view of such circumstances, and an object thereof is to curb degradation of coding efficiency while curbing degradation of subjective image quality.

### [Solution to Problem]

An information processing device according to an aspect of the present technology includes: a low-definition vertex connection information generation unit that generates low-definition vertex connection information; a meta information coding unit that codes meta information including the low-definition vertex connection information; a geometry image generation unit that generates a geometry image by arranging patch images of a target mesh in frame images; and a geometry image coding unit that codes the geometry image, in which the low-definition vertex connection information is vertex connection information regarding vertexes and connections of a low-definition mesh, numbers of which are smaller than numbers of vertexes and connections of the target mesh, the low-definition mesh is 3D data that expresses a three-dimensional structure of an object by the vertexes and the connections, the target mesh is a target of coding, and the patch images express three-dimensional structures of a plurality of patches representing the divided low-definition mesh with two-dimensional coordinates on a projection plane and depth values from the projection plane.

An information processing method according to an aspect of the present technology is an information processing method including: generating low-definition vertex connection information; coding meta information that includes the low-definition vertex connection information; generating a geometry image by arranging patch images of a target mesh in frame images; and coding the geometry image, in which the low-definition vertex connection information is vertex connection information regarding vertexes and connections of a low-definition mesh, numbers of which are smaller than numbers of vertexes and connections of the target mesh, the low-definition mesh is 3D data that expresses a three-dimensional structure of an object by the vertexes and the connections, the target mesh is a target of coding, and the patch images express three-dimensional structures of a plurality of patches representing the divided low-definition mesh with two-dimensional coordinates on a projection plane and depth values from the projection plane.

An information processing device according to another aspect of the present technology is an information processing device including: a meta information decoding unit that decodes coded data of meta information including low-definition vertex connection information; a geometry image decoding unit that decodes coded data of a geometry image in which patch images of a target mesh are arranged in frame images; a patch reconfiguration unit that reconfigures the patch images using the low-definition vertex connection information and the geometry image; a subdividing unit that subdivides polygons of the patch images obtained through the reconfiguration; and a mesh reconfiguration unit that reconfigures a mesh using the subdivided patch images, in which the low-definition vertex connection information is vertex connection information regarding vertexes and connections of a low-definition mesh, numbers of which are smaller than numbers of vertexes and connections of the target mesh, the low-definition mesh is 3D data that expresses a three-dimensional structure of an object by the vertexes and the connections, the target mesh is a target of coding, and the patch images express three-dimensional structures of a plurality of patches representing the divided low-definition mesh with two-dimensional coordinates on a projection plane and depth values from the projection plane.

An information processing method according to another aspect of the present technology is an information processing method including: decoding coded data of meta information that includes low-definition vertex connection information; decoding coded data of a geometry image in which patch images of a target mesh are arranged in frame images; reconstructing patch images using the low-definition vertex connection information and the geometry image; subdividing polygons of the patch images obtained through the reconfiguration; and reconfiguring a mesh using the patch images obtained through the subdividing, in which the low-definition vertex connection information is vertex connection information regarding vertexes and connections of a low-definition mesh, numbers of which are smaller than numbers of vertexes and connections of the target mesh, the low-definition mesh is 3D data that expresses a three-dimensional structure of an object by the vertexes and the connections, the target mesh is a target of coding, and the patch images express three-dimensional structures of a plurality of patches representing the divided mesh with two-dimensional coordinates on a projection plane and depth values from the projection plane.

In the information processing device and method according to an aspect of the present technology, the low-definition vertex connection information is generated, the meta information including the low-definition vertex connection information is coded, the geometry image is generated by arranging the patch images of the target mesh in the frame images, and the geometry image is coded.

In the information processing device and method according to another aspect of the present technology, the coded data of the meta information including the low-definition vertex connection information is decoded, the coded data of the geometry image in which the patch images of the target mesh are arranged in the frame images is decoded, the patch images are reconfigured using the low-definition vertex connection information and the geometry image, polygons of the reconstructed patch images are subdivided, and the mesh is reconstructed using the subdivided patch images.

### [Brief Description of Drawings]

[Fig. 1]

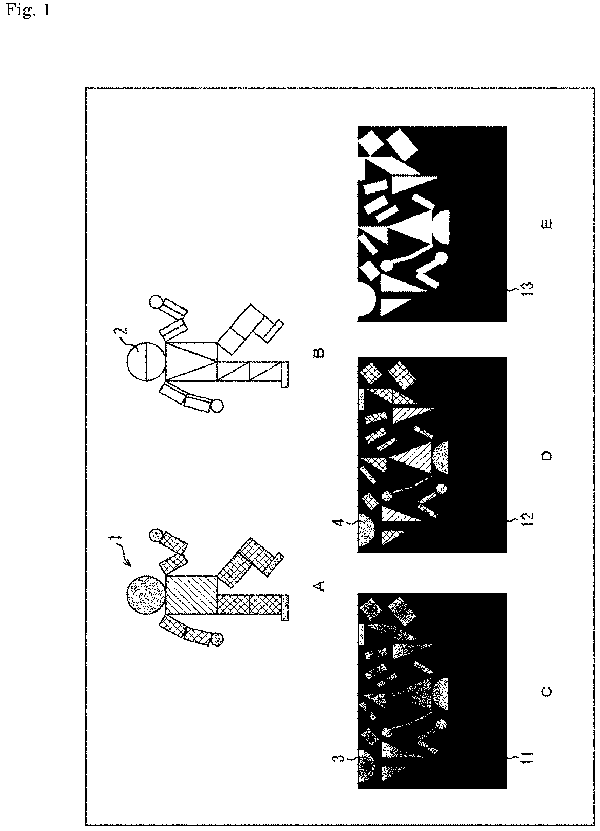

   Fig. 1 is an explanatory diagram of a video-based approach.
[Fig. 2]

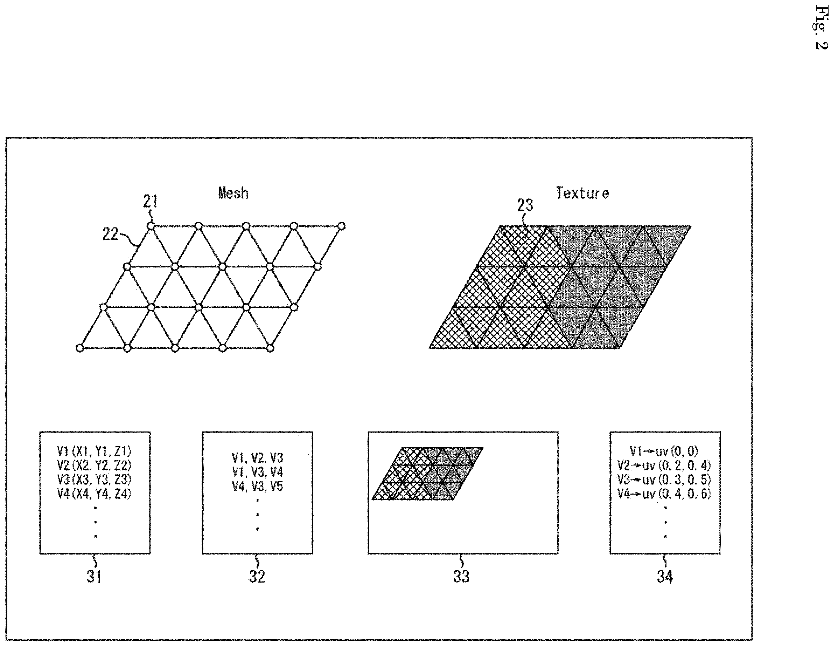

   Fig. 2 is an explanatory diagram of a mesh.
[Fig. 3]

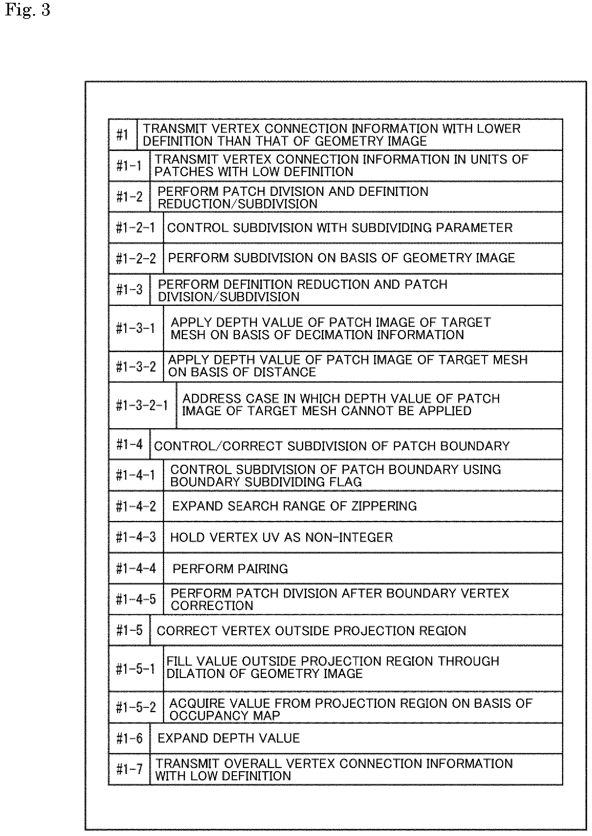

   Fig. 3 is an explanatory diagram of coding and decoding methods.
[Fig. 4]

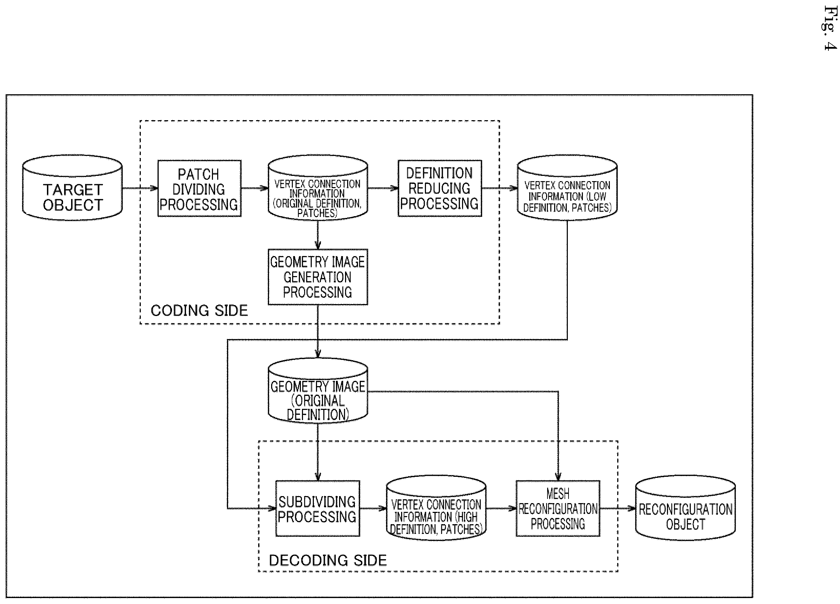

   Fig. 4 is an explanatory diagram of an overview of coding and decoding.
[Fig. 5]

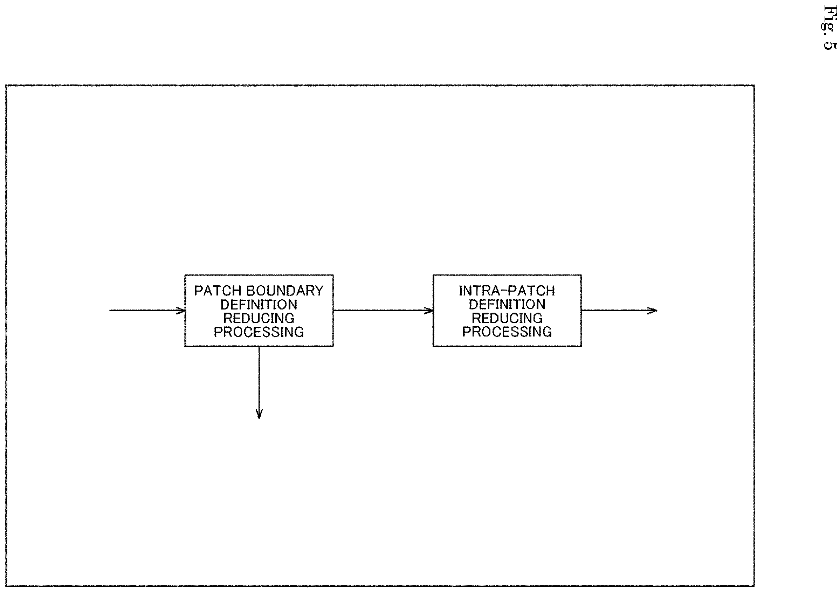

   Fig. 5 is an explanatory diagram of decimation.
[Fig. 6]

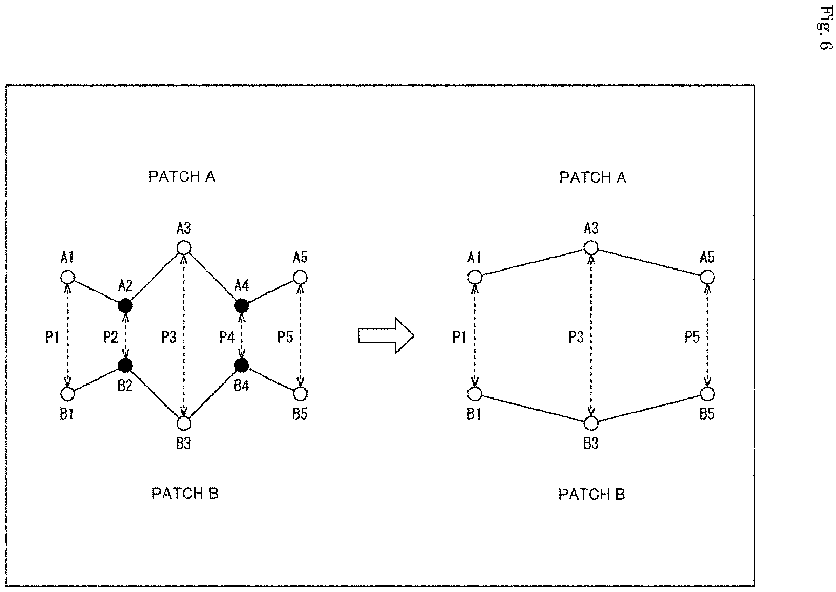

   Fig. 6 is an explanatory diagram of decimation.
[Fig. 7]

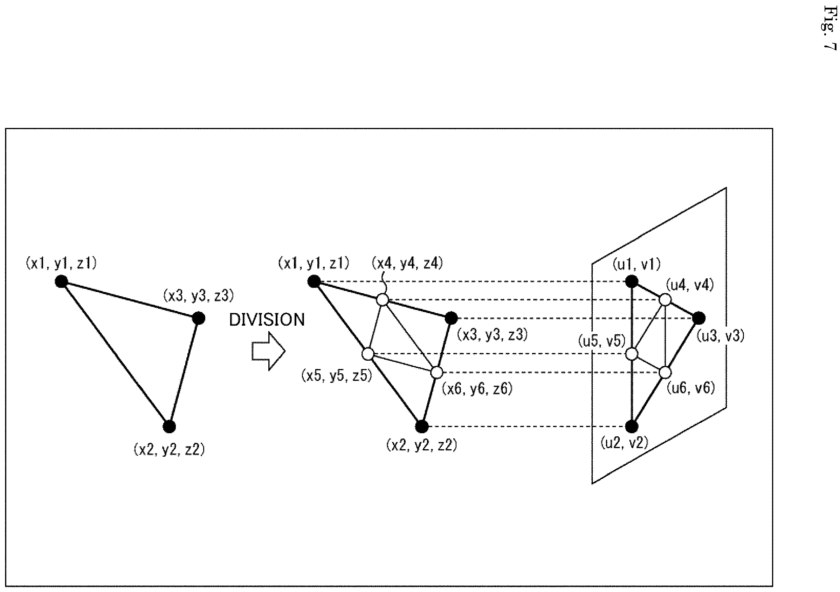

   Fig. 7 is an explanatory diagram of subdivision.
[Fig. 8]

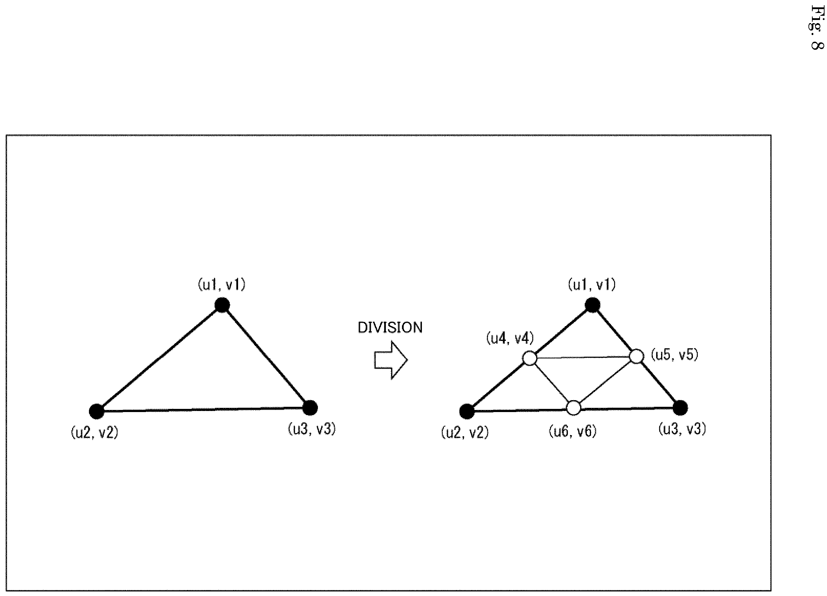

   Fig. 8 is an explanatory diagram of subdivision.
[Fig. 9]

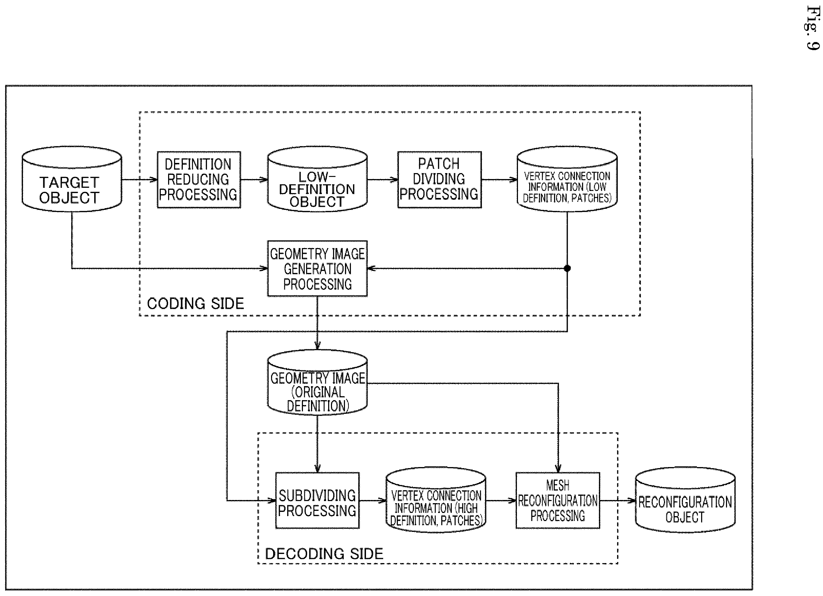

   Fig. 9 is an explanatory diagram of an overview of coding and decoding.
[Fig. 10]

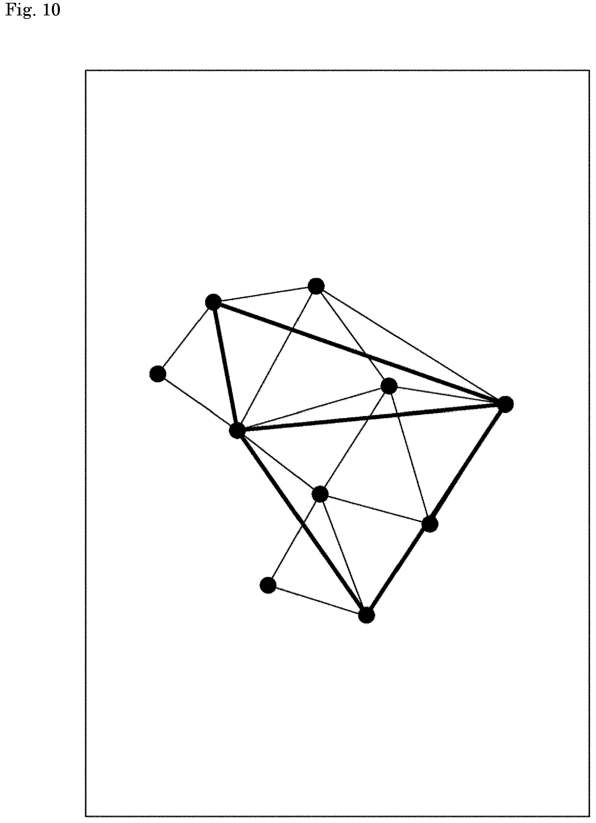

   Fig. 10 is an explanatory diagram of generation of a geometry image.
[Fig. 11]

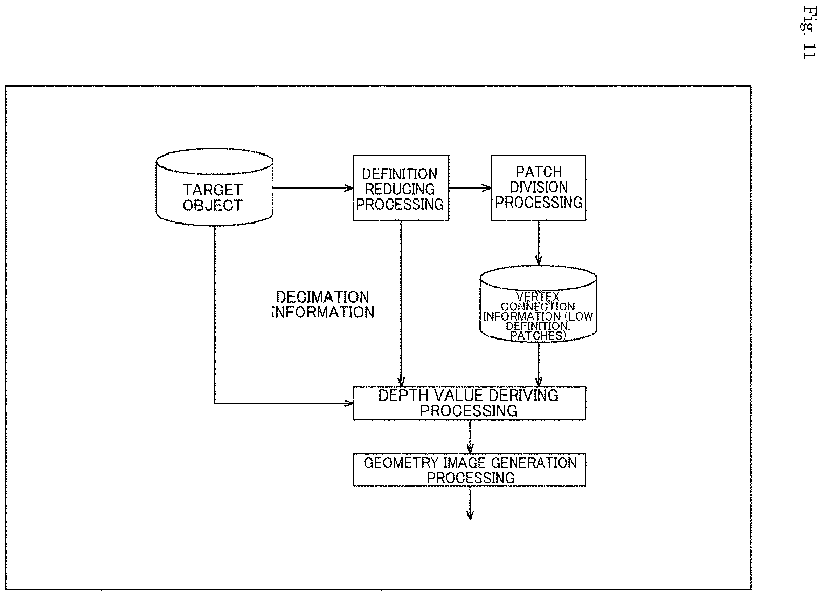

   Fig. 11 is an explanatory diagram of generation of the geometry image.
[Fig. 12]

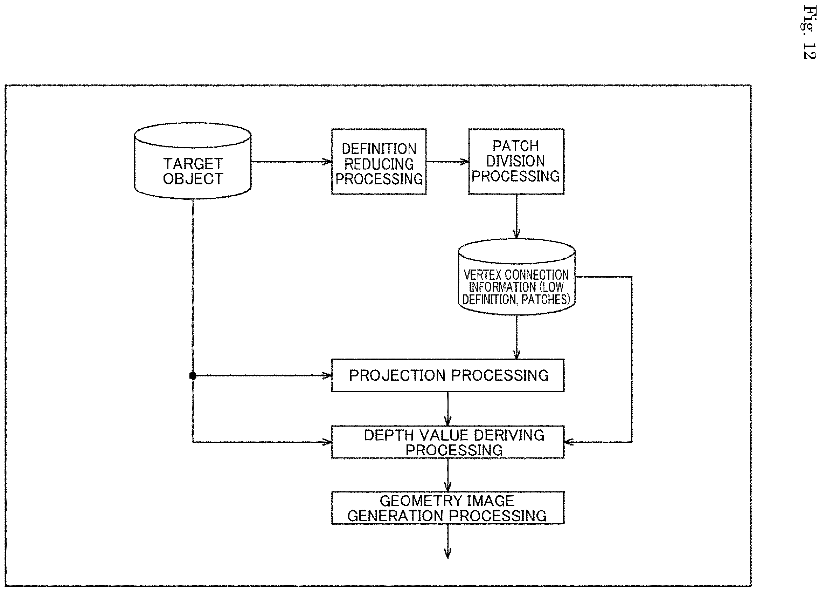

   Fig. 12 is an explanatory diagram of generation of the geometry image.
[Fig. 13]

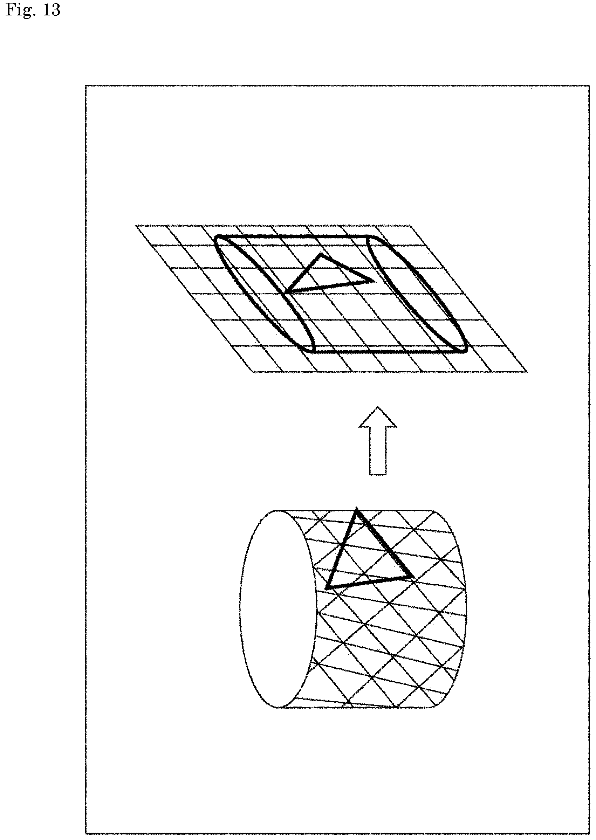

   Fig. 13 is an explanatory diagram of generation of the geometry image.
[Fig. 14]

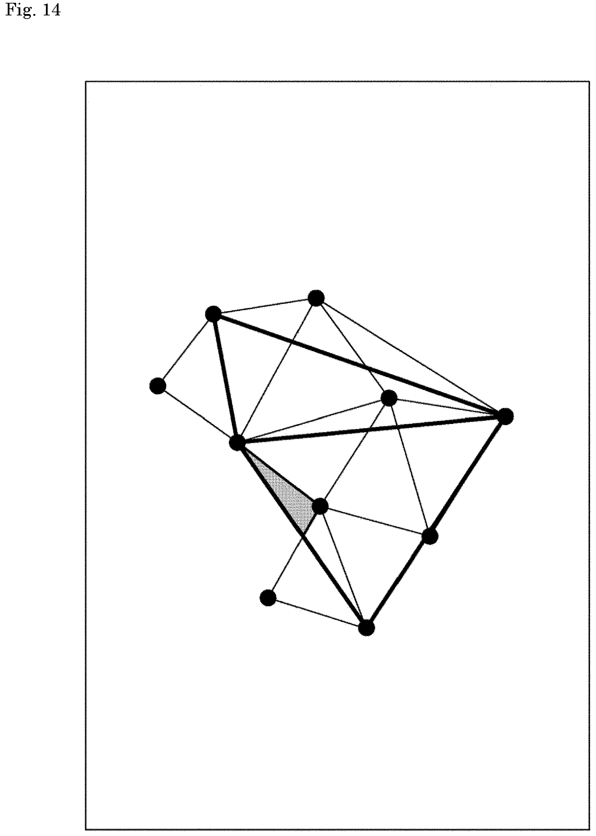

   Fig. 14 is an explanatory diagram of generation of the geometry image.
[Fig. 15]

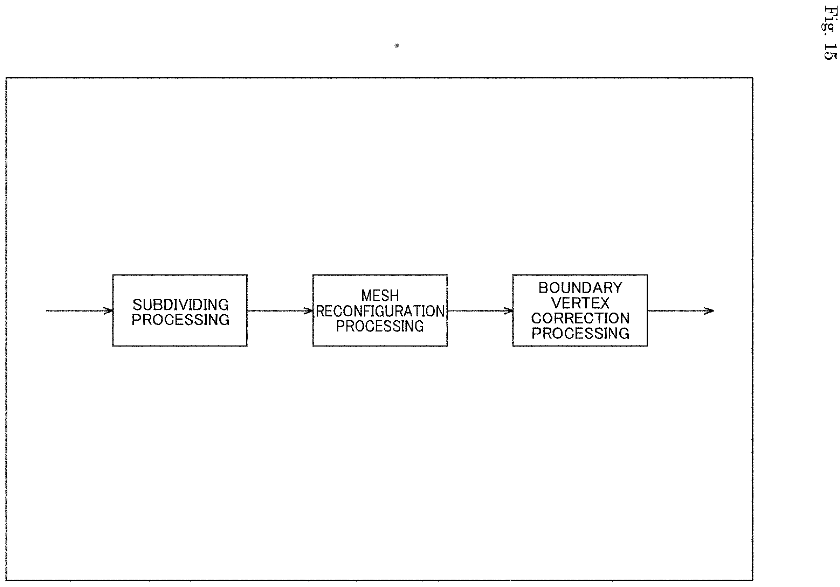

   Fig. 15 is an explanatory diagram of boundary vertex correction.
[Fig. 16]

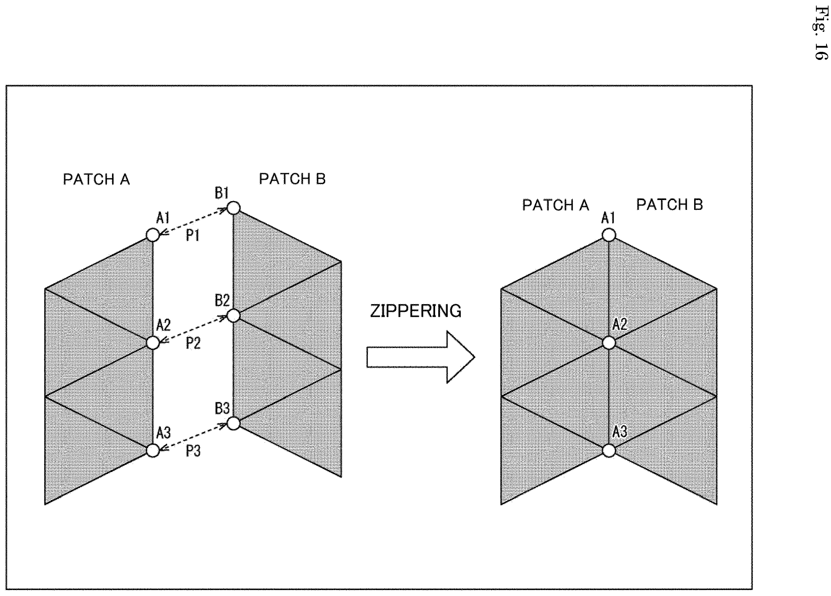

   Fig. 16 is an explanatory diagram of zippering.
[Fig. 17]

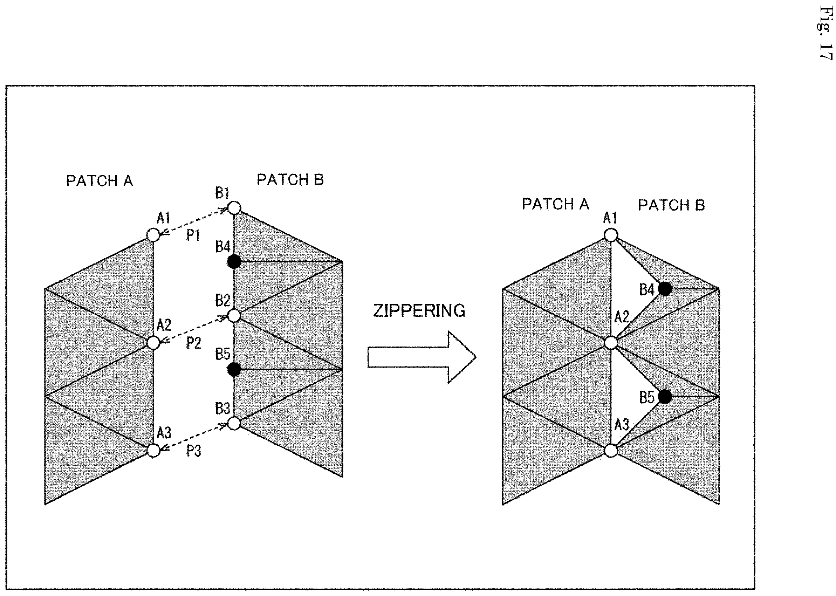

   Fig. 17 is an explanatory diagram of zippering.
[Fig. 18]

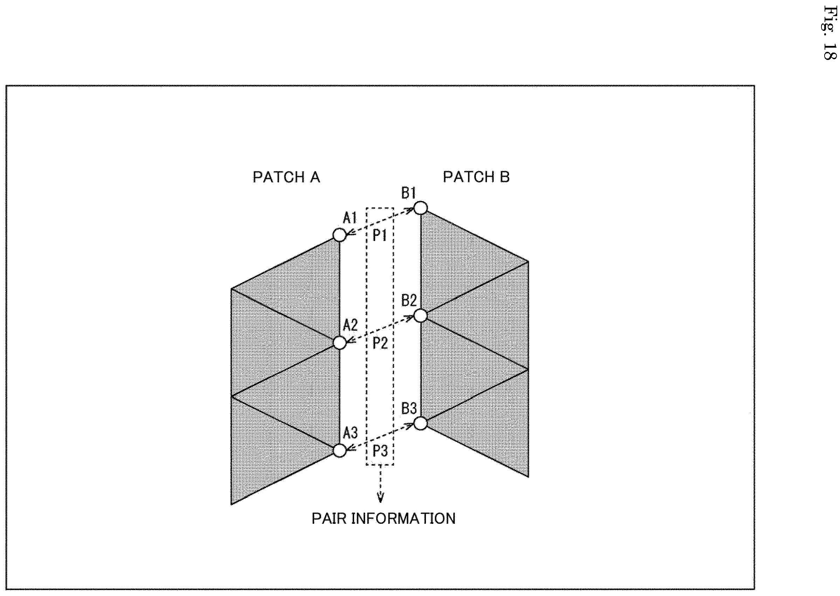

   Fig. 18 is an explanatory diagram of pairing.
[Fig. 19]

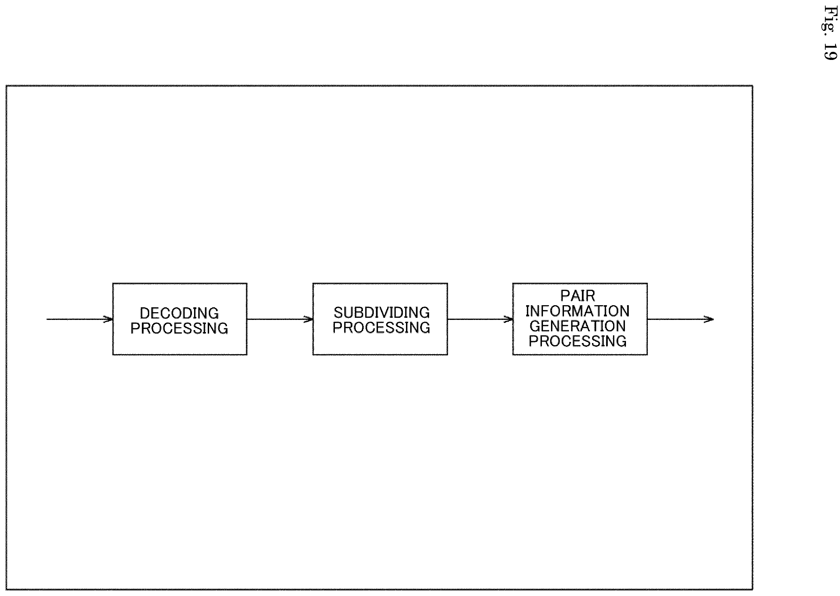

   Fig. 19 is an explanatory diagram of pair information generation.
[Fig. 20]

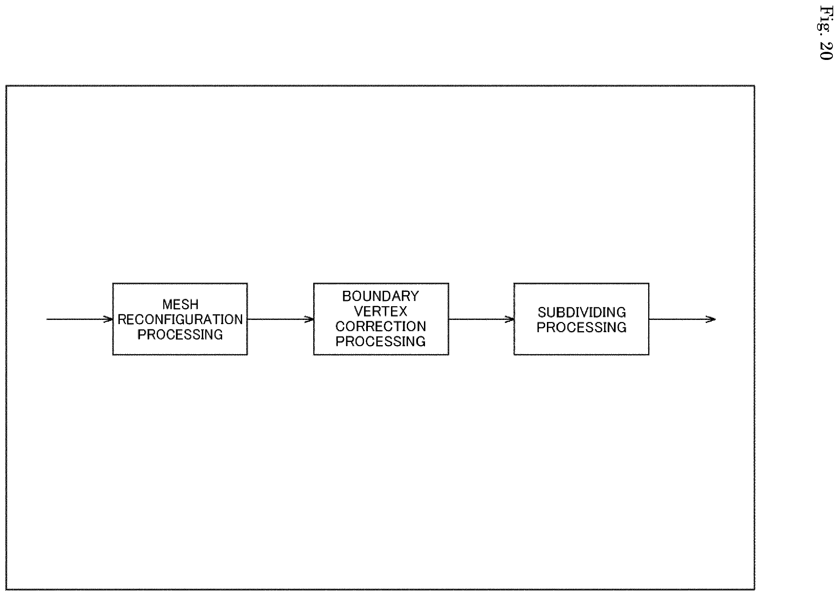

   Fig. 20 is an explanatory diagram of boundary vertex correction.
[Fig. 21]

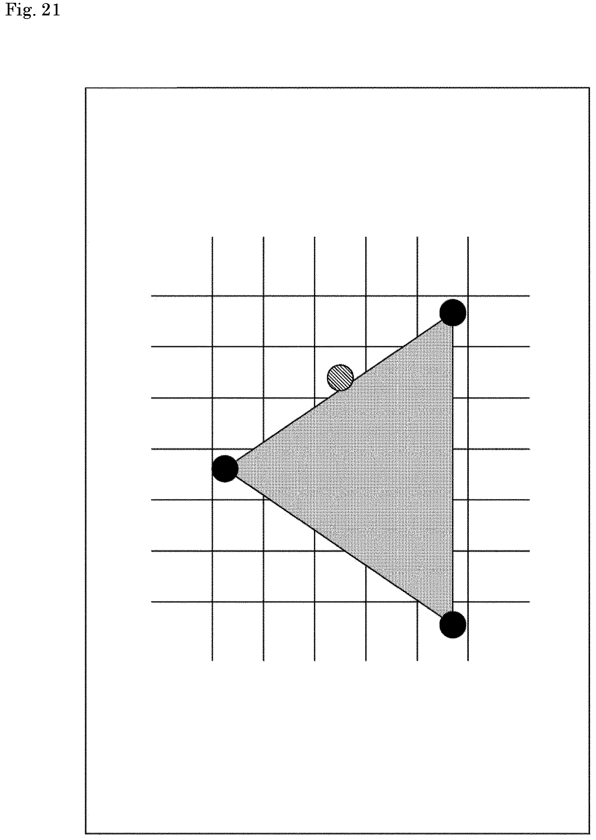

   Fig. 21 is an explanatory diagram of outside-projection-region vertex correction.
[Fig. 22]

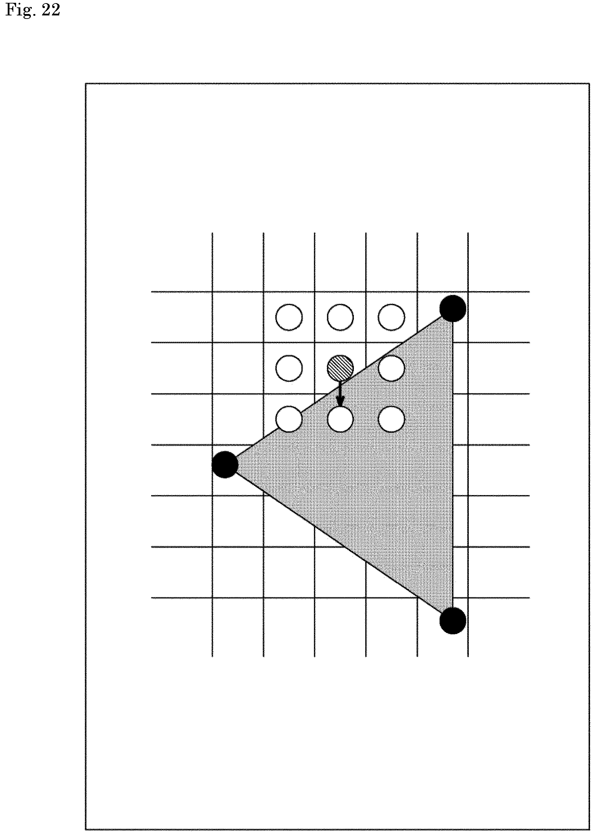

   Fig. 22 is an explanatory diagram of outside-projection-region vertex correction.
[Fig. 23]

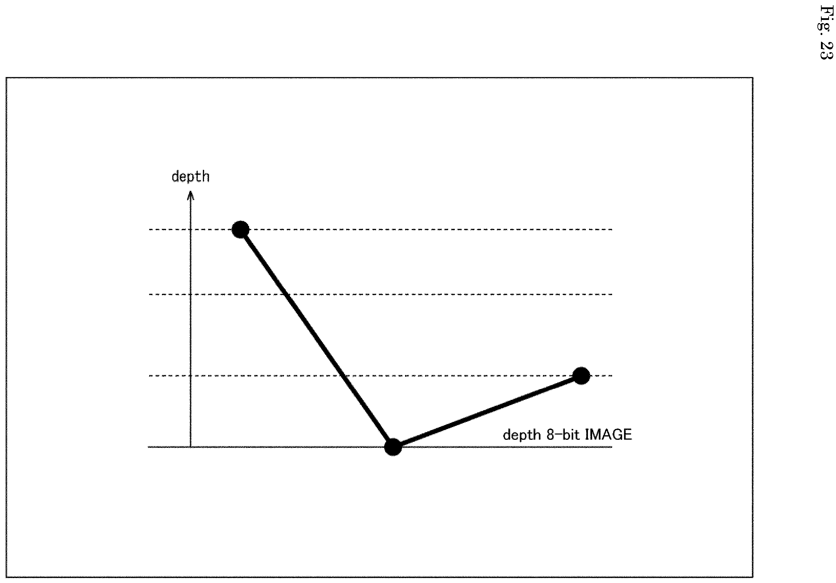

   Fig. 23 is an explanatory diagram of addition of vertexes.
[Fig. 24]

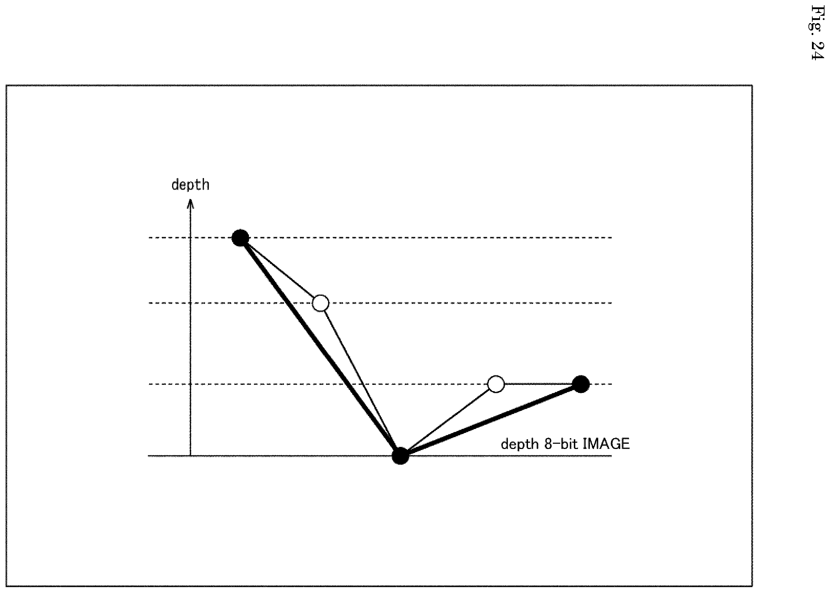

   Fig. 24 is an explanatory diagram of addition of vertexes.
[Fig. 25]

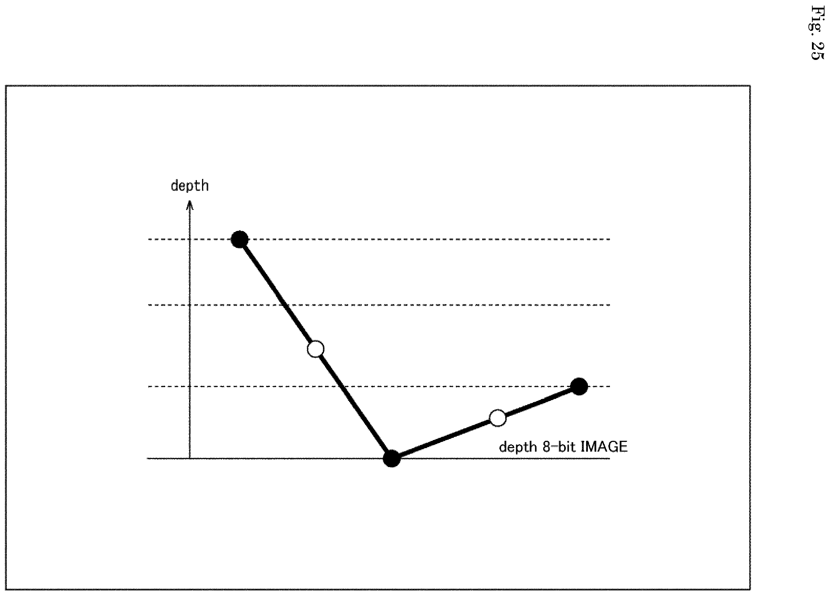

   Fig. 25 is an explanatory diagram of addition of vertexes.
[Fig. 26]

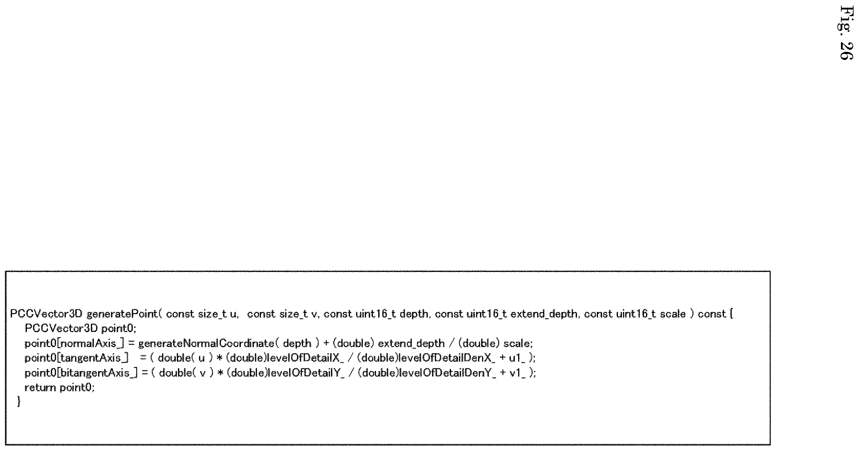

   Fig. 26 is a diagram illustrating an example of syntax.
[Fig. 27]

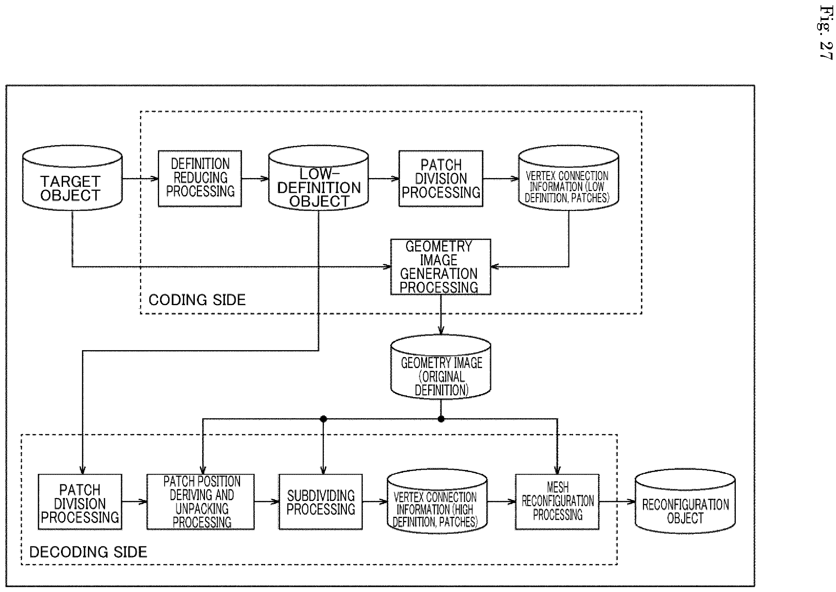

   Fig. 27 is an explanatory diagram of an overview of coding and decoding.
[Fig. 28]

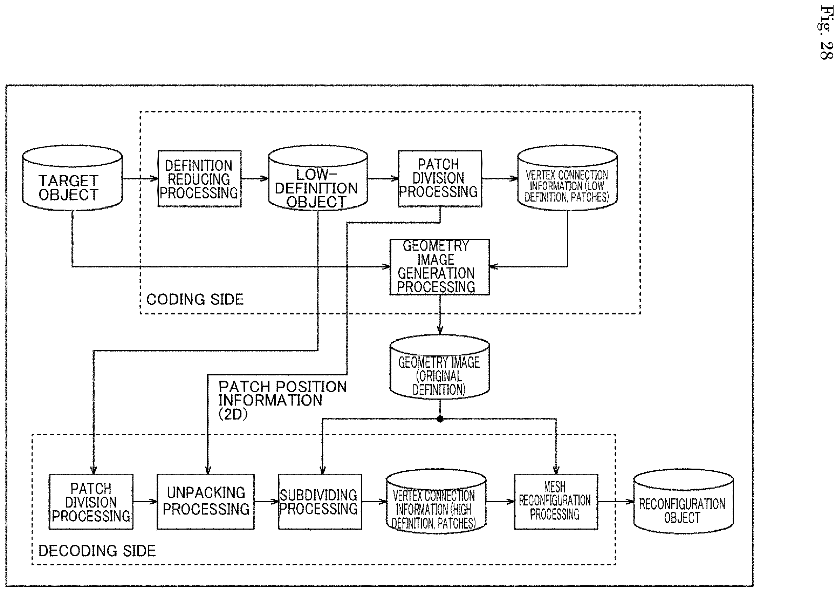

   Fig. 28 is an explanatory diagram of an overview of coding and decoding.
[Fig. 29]

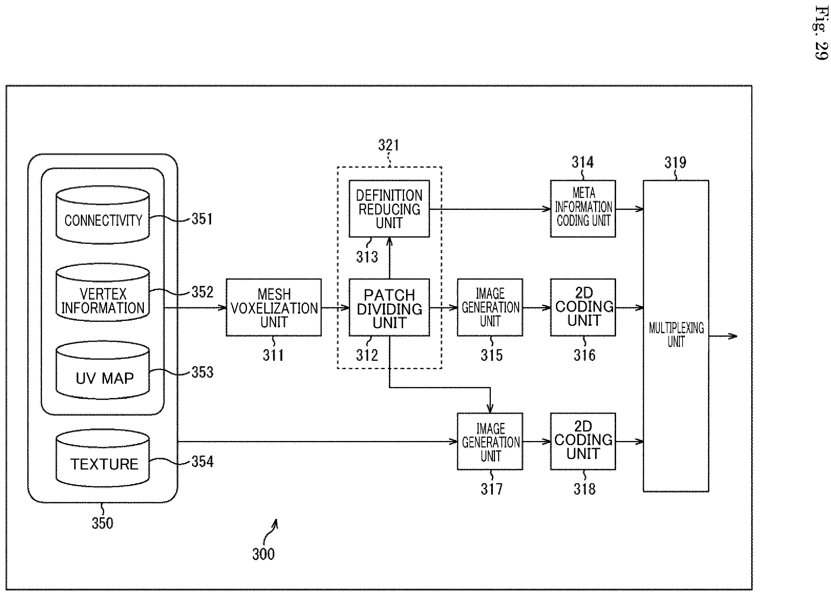

   Fig. 29 is a block diagram illustrating an example of major components of a coding device.
[Fig. 30]

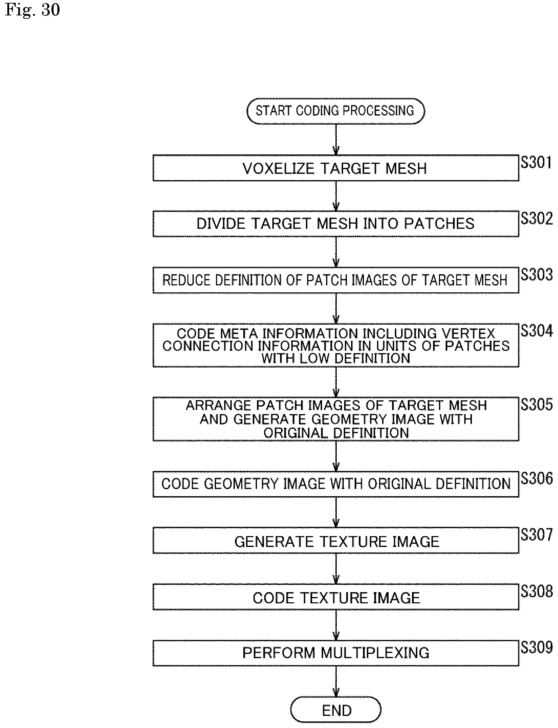

   Fig. 30 is a flowchart for explaining an example of a flow of coding processing.
[Fig. 31]

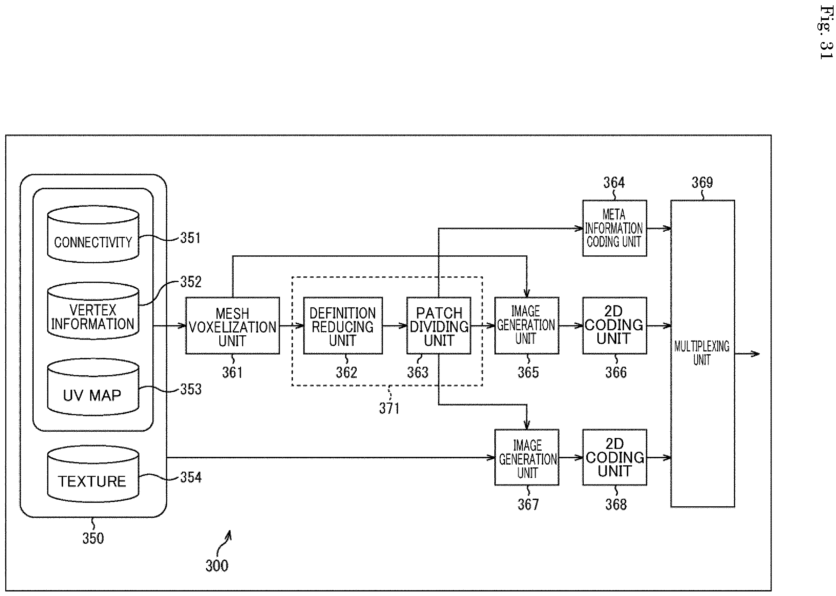

   Fig. 31 is a block diagram illustrating an example of major components of the coding device.
[Fig. 32]

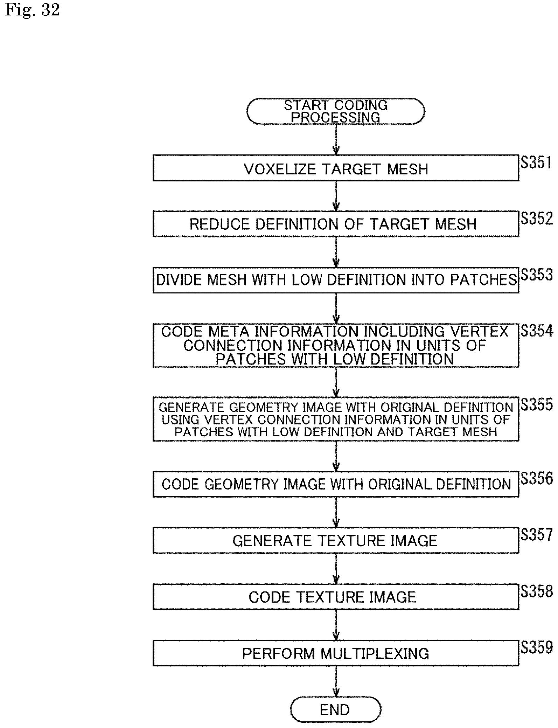

   Fig. 32 is a flowchart for explaining an example of a flow of coding processing.
[Fig. 33]

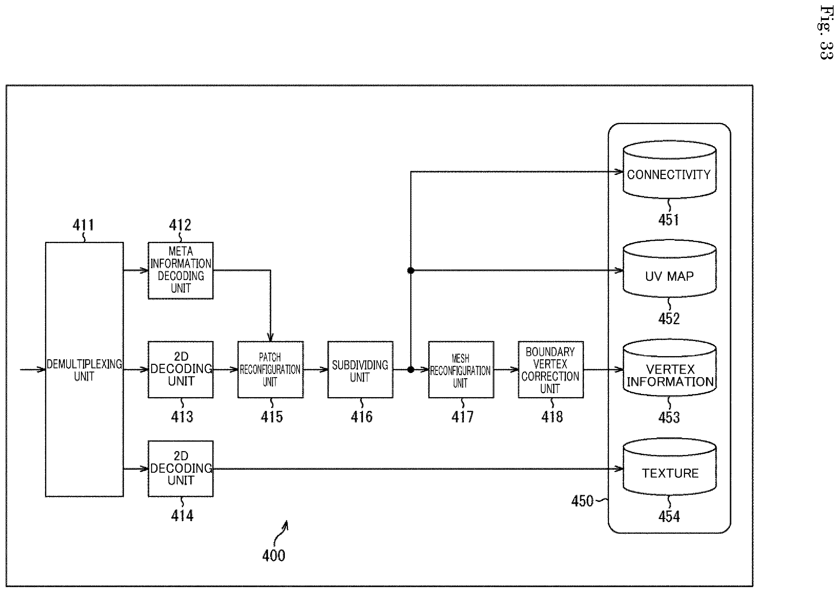

   Fig. 33 is a block diagram illustrating an example of major components of a decoding device.
[Fig. 34]

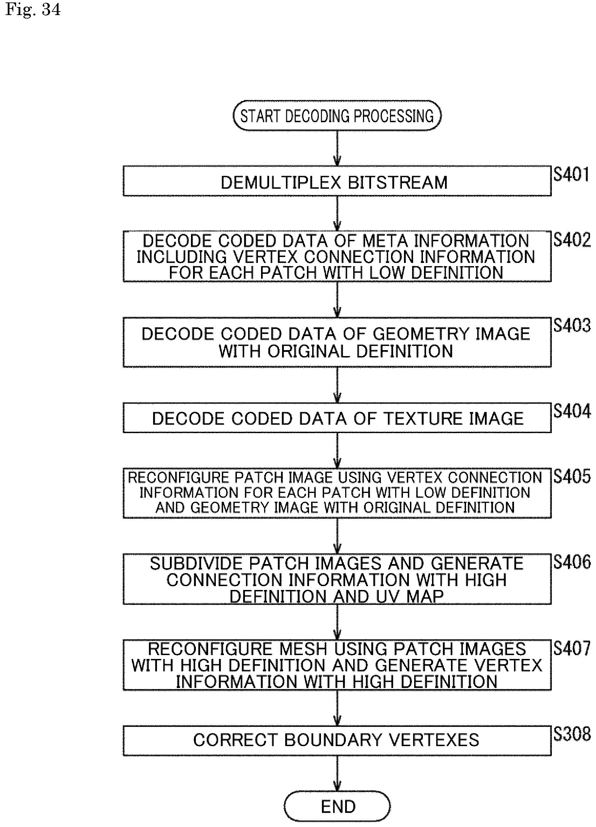

   Fig. 34 is a flowchart for explaining an example of a flow of decoding processing.
[Fig. 35]

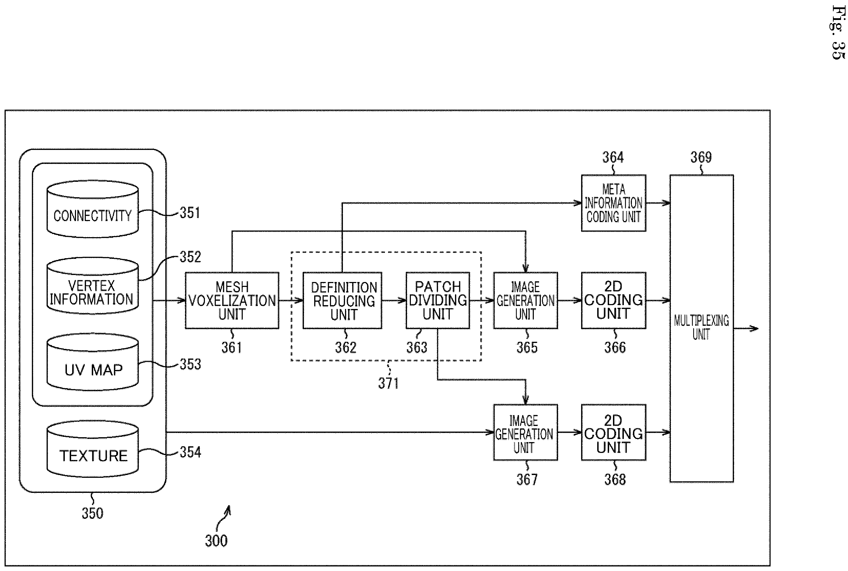

   Fig. 35 is a block diagram illustrating an example of major components of the coding device.
[Fig. 36]

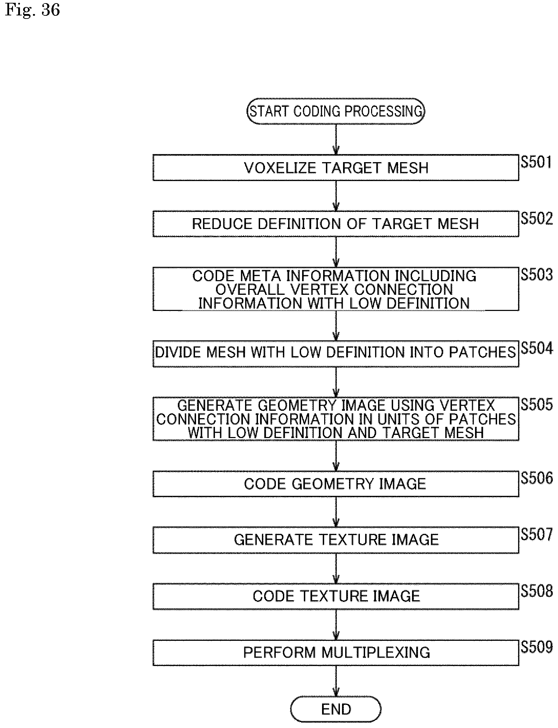

   Fig. 36 is a flowchart for explaining an example of a flow of coding processing.
[Fig. 37]

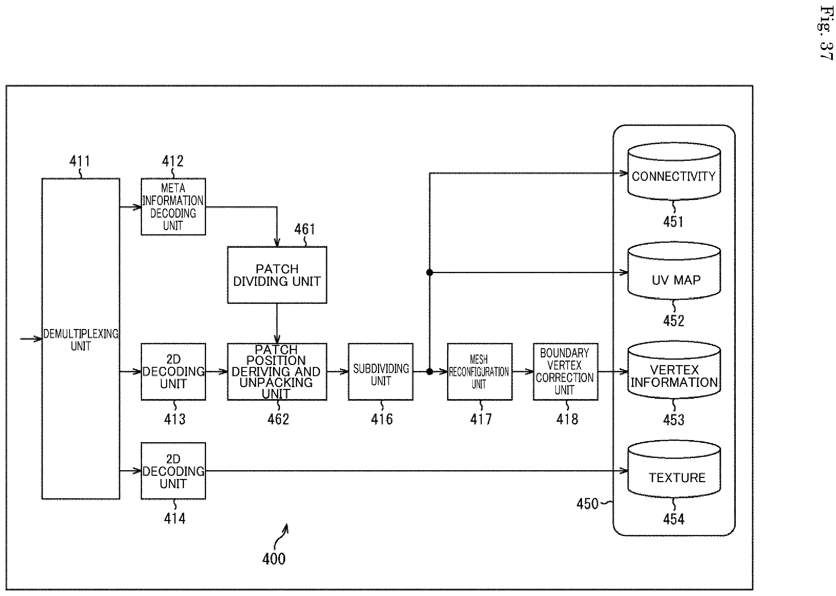

   Fig. 37 is a block diagram illustrating an example of major components of the decoding device.
[Fig. 38]

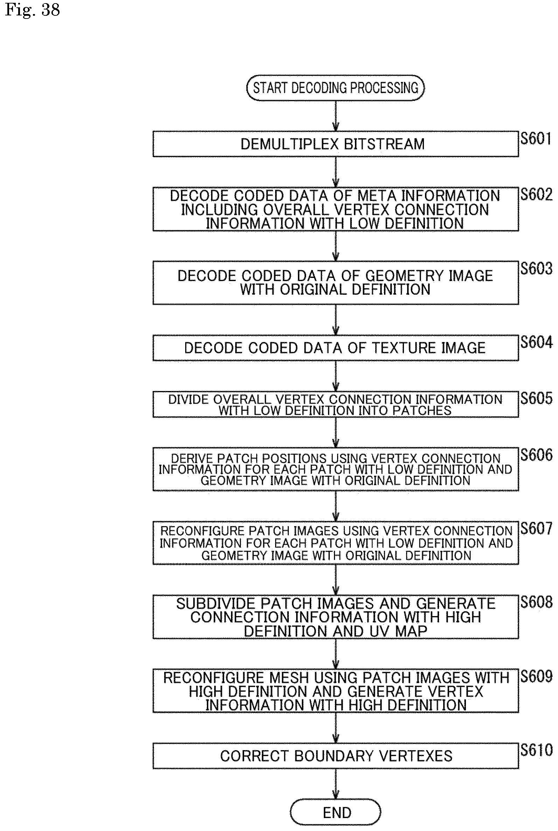

   Fig. 38 is a flowchart for explaining an example of a flow of decoding processing.
[Fig. 39]

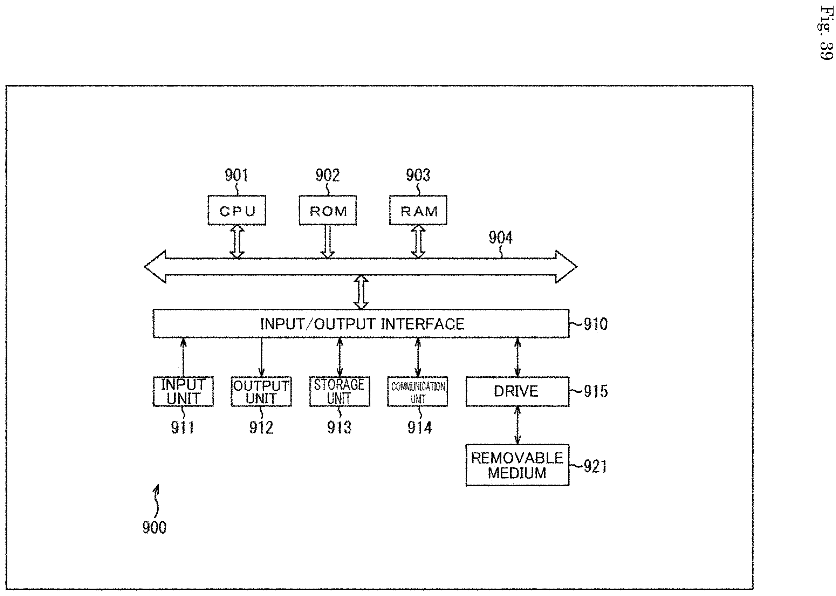

   Fig. 39 is a block diagram illustrating an example of major components of a computer.

### [Description of Embodiments]

Hereinafter, modes for carrying out the present disclosure (hereinafter referred to as embodiments) will be described. The descriptions will be given in the following order.
1. Documents and the like supporting technical details and technical terms
2. VPCC-expanded mesh compression
3. Transmission of low-definition vertex connection information and original-definition geometry image
4. First embodiment (coding device)
5. Second embodiment (coding device)
6. Third embodiment (decoding device)
7. Fourth embodiment (coding device)
8. Fifth embodiment (decoding device)
9. Supplement

### < 1. Documents and the like supporting technical content and technical terms>

The scope disclosed in the present technology is not limited to the content described in embodiments and also includes the content described in NPL below and the like that were known at the time of filing and the content of other literature referred to in NPL below.

### [NPL 1] (Aforementioned)

### [NPL 2] (Aforementioned)

In other words, the contents in the NPLs and the contents of other literatures referred to in the foregoing NPLs are also grounds for determining support requirements.

### <2. VPCC-expanded mesh compression>

### <Point cloud>

In the related art, 3D data such as a point cloud expressing a three-dimensional structure by point position information, attribute information, or the like is present.

In the case of a point cloud, for example, a stereoscopic structure (an object in a three-dimensional shape) is expressed as a group of multiple points. The point cloud includes position information at each point (also referred to as a geometry) and attribute information (also referred to as attributes). The attributes can include any information. For example, the attributes may include color information, reflectance information, and normal line information at each point. Thus, the point cloud has a relatively simple data structure and can represent any stereoscopic structure with sufficient accuracy by using a sufficiently large number of points.

### <VPCC>

Video-based point cloud compression (VPCC) described in NPL 1 is one coding technology for such a point cloud, in which point cloud data that is 3D data representing a three-dimensional structure is coded using a codec for a two-dimensional image.

According to VPCC, each of a geometry and attributes of a point cloud is decomposed into small regions (also referred to as patches), and each patch is projected to a projection plane which is a two-dimensional plane. For example, the geometry and the attributes are projected to any of six planes of a bounding box including an object therein. The geometry and the attributes projected to the projection planes will also be referred to as projected images. Also, the patches projected to the projection planes will also be referred to as patch images.

For example, a geometry of a point cloud 1 indicating an object with a three-dimensional structure illustrated in A of Fig. 1 is decomposed into patches 2 as illustrated in B of Fig. 1, and each patch is projected to a projection plane. In other words, patch images (a projection image for each patch) of the geometry are generated. Each pixel value of the patch images of the geometry indicates a distance (depth value (depth)) from the projection plane to a point.

The attributes of the point cloud 1 are also decomposed into patches 2 similarly to the geometry, and each patch is projected to the same projection plane as that of the geometry. In other words, patch images of the attribute with the same sizes and the same shapes as those of the patch images of the geometry are generated. Each pixel value of the patch images of the attributes indicates an attribute (a color, a normal line vector, a reflectance, or the like) at a point at the same position as that of the corresponding patch image of the geometry.

Also, each of the thus generated patch images is arranged in a frame image (also referred to as a video frame) of a video sequence. In other words, each patch image on the projection plane is arranged in a predetermined two-dimensional plane.

For example, a frame image in which patch images of a geometry are arranged will also be referred to as a geometry video frame. Also, the geometry video frame will also be referred to as a geometry image, a geometry map, or the like. A geometry image 11 illustrated in C of Fig. 1 is a frame image (geometry video frame) in which a patch image 3 of the geometry is arranged. The patch image 3 corresponds to a patch 2 in B of Fig. 1 (an image obtained by projecting the patch 2 of the geometry to a projection plane).

Also, a frame image in which patch images of attributes are arranged will also be referred to as an attribute video frame. Moreover, the attribute video frame will also be referred to as an attribute image or an attribute map. An attribute image 12 illustrated in D in Fig. 1 is a frame image (attribute video frame) in which a patch image 4 of an attribute is arranged. The patch image 4 corresponds to the patch 2 in B of Fig. 1 (an image obtained by projecting the patch 2 of the attribute to a projection plane).

These video frames are coded by using a coding method for a two-dimensional image, for example, advanced video coding (AVC) or high efficiency video coding (HEVC). In other words, the point cloud data, which is 3D data representing a three-dimensional structure, can be coded by using a codec for a two-dimensional image. In general, encoders for 2D data are more widely distributed than encoders for 3D data and can thus be realized at lower costs. In other words, it is possible to curb an increase in cost by applying the video-based approach as described above.

Note that an occupancy image (also referred to as an occupancy map) can also be used in the case of such a video-based approach. The occupancy image is map information indicating presence/absence of a projection image (patch image) for each of N x N pixels of a geometry video frame or an attribute video frame. For example, the occupancy image indicates a region (N x N pixels) where patch images are present in the geometry image or the attribute image with a value "1" and indicates a region (N x N pixels) where no patch images are present with a value "0".

Such an occupancy image is coded as data separate from the geometry image or the attribute image and is transmitted to a decoding side. A decoder can recognize whether or not a patch is present in a region with reference to the occupancy map, can thus curb influences of noise and the like caused by coding/decoding, and can more accurately reconfigure a point cloud. Even if depth values change through coding/decoding, for example, the decoder can ignore (not process as position data of 3D data) the depth values in the region where no patch images are present with reference to the occupancy map.

For example, an occupancy image 13 as illustrated in E of Fig. 1 may be generated for the geometry image 11 in C of Fig. 1 or the attribute image 12 in D of Fig. 1. In the occupancy image 13, a white portion indicates a value "1" and a black portion indicates a value "0".

Note that the occupancy image can also be transmitted as a video frame similarly to the geometry video frame, the attribute video frame, or the like. In other words, the occupancy image is coded by a coding method for a two-dimensional image such as AVC or HEVC similarly to a geometry or an attribute.

In other words, in the case of VPCC, the geometry and the attribute of the point cloud are projected to the same projection plane and are arranged at the same position in the frame image. In other words, the geometry and the attribute at each point are associated with each other by their positions on the frame image.

### <Mesh>

Incidentally, in addition to the point cloud, a mesh, for example, is also 3D data for expressing an object with a three-dimensional structure. The mesh expresses surfaces of an object in a three-dimensional space by polygons that are planes (polygonal shapes) surrounded by sides 22 connecting vertexes 21 as illustrated in Fig. 2. 3D data for expressing the object includes the mesh and a texture 23 attached to each polygon as illustrated in Fig. 2.

The mesh is configured by vertex information 31 including position information (three-dimensional coordinates (X, Y, Z)) of each vertex 21, connectivity 32 indicating vertexes 21 and sides 22 configuring each polygon, a texture image 33 that is map information of the texture 23 attached to each polygon, and a UV map 34 indicating the positions of the texture corresponding to each vertex 21 in the texture image 33 (that is, the position of each vertex 21 in the texture image 33) as illustrated in the lower section in Fig. 2, for example. The UV map 34 indicates the position of each vertex by UV coordinates that are coordinates on the texture image 33.

In the case of the mesh, a correspondence between each vertex 21 and the texture 23 is indicated by the UV map 34 unlike the aforementioned case of VPCC. Therefore, the texture image 33 is configured as map information that is independent from the vertex information 31 configured by the three-dimensional coordinates of each vertex as in the example in Fig. 2. Therefore, a projection direction and a resolution of the texture 23 of each polygon can be arbitrarily set in the texture image 33.

### <Compression of mesh using VPCC>

As a compression method for such a mesh, a method of compressing (coding) the mesh by expanding the aforementioned VPCC is proposed in NPL 2, for example.

In the case of the method of compressing (coding) the mesh by expanding VPCC, a texture and a geometry of a mesh are divided into a plurality of patches, are arranged in a single image, and are coded by a coding method for a two-dimensional image as a geometry image and a texture image, respectively. However, since it is difficult to specify vertexes and connections therebetween of the mesh using only the geometry image, vertex connection information is separately coded. The vertex connection information is information regarding the vertexes and the connections of the mesh. The connections are connections (connectivity) between the vertexes in the mesh.

Therefore, there is a concern that coding efficiency may be degraded due to the vertex connection information. Additionally, since the amount of data of the vertex connection information increases as the definition of the mesh increases, there is a concern that mesh coding efficiency may be further degraded.

For example, there is a technology called wavelet subdivision surfaces (WSSs) in animation framework extension (MPEG4 AFX). WSSs are a technology for realizing a scalable function, and enable details of an arbitrary LOD to be extracted through coding with a (one-dimension) wavelet. Coding the vertex connection information with the definition thereof reduced by an encoder and restoring the vertex connection information with a high definition by a decoder by applying WSSs to coding of the vertex connection information is conceivable. It is thus possible to expect that an increase in coding amount of the vertex connection information can be curbed.

However, WSSs are a technology of increasing a definition of a mesh with a low definition, and an application to compression of the mesh using VPCC has not been taken into consideration. In other words, there is a concern that if WSSs are simply applied to coding of the vertex connection information, it will not be possible to obtain correspondence with the geometry image and the texture image, and it will be difficult to accurately restore the mesh. Also, although reducing the number of vertexes of the mesh to be coded and reducing the definition (the definitions of the geometry image and the texture image are also reduced similarly to the vertex connection information) is conceivable, there is a concern that accuracy of the shape of the mesh and the texture restored may be degraded and subjective image quality may be degraded.

Also, NPL 2 proposes a method of transmitting vertex information (vertex (UV)) from a coding side to a decoding side and omitting transmission of connection information (connectivity). According to the method, it is possible to reduce the amount of coding of connection information. However, in the case of this method, it is difficult to appropriately connect vertexes on the decoding side and to generate polygons. There is thus a concern that quality (subjective quality) of the reconfigured mesh may be degraded.

### <3. Transmission of low-definition vertex connection information and original-definition geometry image>

### <Low-definition vertex connection information (#1)>

Thus, vertex connection information with a lower definition than that of the geometry image is transmitted (#1) as illustrated in the top section of the table in Fig. 3.

For example, an information processing device (a coding device, for example) includes a low-definition vertex connection information generation unit generating low-definition vertex connection information; a meta information coding unit coding meta information that includes the low-definition vertex connection information; a geometry image generation unit generating a geometry image by arranging patch images of a target mesh in frame images; and a geometry image coding unit coding the geometry image. Note that the low-definition vertex connection information is vertex connection information regarding vertexes and connections of a low-definition mesh, the numbers of which are smaller than those of the vertexes and the connections of the target mesh. Also, the low-definition mesh is 3D data that expresses a three-dimensional structure of an object by the vertexes and the connections. Also, the target mesh is a target of coding. Moreover, the patch images express three-dimensional structures of a plurality of patches representing divided low-definition meshes by two-dimensional coordinates on a projection plane and depth values from the projection plane.

For example, in an information processing method (a coding method, for example), low-definition vertex connection information is generated, meta information including the low-definition vertex connection information is coded, a geometry image is generated by arranging patch images of a target mesh in frame images, and the geometry image is coded. Note that the low-definition vertex connection information is vertex connection information regarding vertexes and connections of a low-definition mesh, the number of which are smaller than those of the vertexes and the connections of the target mesh. Also, the low-definition mesh is 3D data that expresses a three-dimensional structure of an object by the vertexes and the connections. Also, the target mesh is a target of coding. Moreover, the patch images express three-dimensional structures of a plurality of patches representing divided low-definition meshes by two-dimensional coordinates on a projection plane and depth values from the projection plane.

For example, an information processing device (a decoding device, for example) includes: a meta information decoding unit decoding coded data of meta information including low-definition vertex connection information; a geometry image decoding unit decoding coded data of a geometry image in which patch images of a target mesh are arranged in frame images; a patch reconfiguration unit reconfiguring the patch images using the low-definition vertex connection information and the geometry image; a subdividing unit subdividing polygons of the reconfigured patch images; and a mesh reconfiguration unit reconfiguring the mesh using the subdivided patch images. Note that the low-definition vertex connection information is vertex connection information regarding vertexes and connections of a low-definition mesh, the number of which are smaller than those of the vertexes and the connections of the target mesh. Also, the low-definition mesh is 3D data that expresses a three-dimensional structure of an object by the vertexes and the connections. Also, the target mesh is a target of coding. Moreover, the patch images express three-dimensional structure of a plurality of patches representing divided low-definition meshes by two-dimensional coordinates on a projection plane and depth values from the projection plane.

For example, in an information processing method (a decoding method, for example), coded data of meta information including low-definition vertex connection information is decoded, coded data of a geometry image in which patch images of a target mesh are arranged in frame images is decoded, the patch images are reconfigured using the low-definition vertex connection information and the geometry image, polygons of the reconfigured patch images are subdivided, and a mesh is reconfigured using the subdivided patch images. Note that the low-definition vertex connection information is vertex connection information regarding vertexes and connections of a low-definition mesh, the number of which are smaller than those of the vertexes and the connections of the target mesh. Also, the low-definition mesh is 3D data that expresses a three-dimensional structure of an object by the vertexes and the connections. Also, the target mesh is a target of coding. Moreover, the patch images express three-dimensional structure of a plurality of patches representing divided low-definition meshes by two-dimensional coordinates on a projection plane and depth values from the projection plane.

Here, the target mesh may be an original mesh input to an encoder or may be a mesh in which the number of vertexes has been reduced from the original mesh to some extent. Also, the definition of the mesh, the vertex connection information, or the like indicates how large the numbers of vertexes and connections are. A low definition indicates that the number of vertexes (and the number of connections) in the mesh, the vertex connection information, or the like is small. Note that the definition of the target mesh (or the original mesh) will also be referred to as an original definition. Hereinafter, a state achieved by increasing the number of vertexes (and the number of connections) as compared with the case of the low definition will also be referred to as high definition (relative to the low definition).

As described above, the vertex connection information is information (low-definition vertex connection information) with a lower definition than the geometry image. Therefore, the encoder can reduce the amount of coding of the vertex connection information. Also, a decoder can decode coded data of the vertex connection information, and it is thus possible to realize reduction of the amount of coding of the vertex connection information. Therefore, the encoder and the decoder can curb degradation of mesh coding efficiency.

On the other hand, the geometry image is generated using the target mesh and thus includes vertex information with the original definition. The decoder can reconfigure a mesh with a higher definition than the low-definition vertex connection information by transmitting such a geometry image from the encoder to the decoder. Therefore, the encoder and the decoder can curb degradation of subjective image quality of the reconfigured mesh.

In other words, the encoder and the decoder can curb degradation of coding efficiency while curbing degradation of subjective image quality by applying the present disclosure.

Note that the information processing device (the coding device, for example) may further include a texture image generation unit generating a texture image by arranging a texture of the target mesh in a frame image for each patch and a texture image coding unit coding the texture image.

Also, the information processing device (the decoding device, for example) may further include a texture image decoding unit decoding coded data of a texture image in which a texture of the target mesh is arranged in a frame image for each patch.

Moreover, the information processing device (the decoding device, for example) may perform subdividing using a subdivision filter.

Also, the information processing device (the decoding device, for example) may perform boundary vertex correction on the reconfigured (high-definition) mesh. The boundary vertex correction is processing of correcting vertexes at the boundary of the patches of the reconfigured mesh. A method of the boundary vertex correction is arbitrary. For example, the method may be zippering or pairing of merging vertexes at the patch boundary using transmitted pair information, or other information may be used.

### <Low-definition vertex connection information for each patch (#1-1)>

Also, vertex connection information in units of patches with a low definition may be transmitted as illustrated in the second section from the top of the table in Fig. 3 (#1-1). For example, the low-definition vertex connection information may include information indicating vertexes and connections for each patch. In other words, the low-definition vertex connection information may be information for each patch.

### <Definition reduction after patch division (#1-2)>

Also, the encoder may generate the low-definition vertex connection information by dividing the target mesh into patches and reducing the definition as illustrated in the third section from the top of the table in Fig. 3. Moreover, the decoder may subdivide the low-definition vertex connection information (#1-2).

For example, the low-definition vertex connection information generation unit may include a patch dividing unit dividing the target mesh into a plurality of patches and generating original-definition vertex connection information including information indicating vertexes and connections of the target mesh for each patch and a definition reducing unit that generates low-definition vertex connection information by reducing the number of vertexes for each patch in the original-definition vertex connection information, in the information processing device (the coding device, for example). Additionally, the geometry image generation unit may generate a geometry image using the original-definition vertex connection information.

As illustrated in Fig. 4, for example, patch dividing processing is performed on the target object, and vertex connection information (original definition, patches) is generated on the coding side. Also, definition reducing processing is performed on the vertex connection information (original definition, patches), and vertex connection information (low definition, patches) is generated on the coding side. The vertex connection information (low definition, patches) is transmitted to the decoding side. Also, geometry image generation processing is executed using the vertex connection information (original definition, patches) on the coding side. In this manner, the geometry image (original definition) is generated. The geometry image (original definition) is transmitted to the decoding side.

Also, subdividing processing is executed using the vertex connection information (low definition, patches) and the geometry image (original definition), and the vertex connection information (high definition, patches) is generated on the decoding side. Also, mesh reconfiguration processing is executed using the vertex connection information (high definition, patches) and the vertex connection information (original definition, patches), and a high-definition reconfigured object is generated on the decoding side.

In this manner, the encoder and the decoder can curb degradation of coding efficiency while curbing degradation of subjective image quality of the reconfigured mesh.

Note that in the information processing device (the coding device for example), the definition reducing unit may generate the low-definition vertex connection information by decimating the vertexes included in the original-definition vertex connection information. Also, the definition reducing unit may execute patch boundary decimation and intra-patch decimation for each patch included in the original-definition vertex connection information. Note that the patch boundary decimation is processing of decimating the vertexes at the boundaries of the plurality of divided patches, the intra-patch decimation is processing of decimating the vertexes inside each patch.

As illustrated in Fig. 5, for example, intra-patch definition reducing processing of decimating the vertexes inside the patches may be performed after patch boundary definition reducing processing of decimating the vertexes at the boundaries of the patches is performed.

Also, the definition reducing unit may decimate the vertexes at the boundaries of the patches for each vertex pair as the patch boundary decimation. Note that the vertex pair is configured of a plurality of vertexes of mutually different patches, and the plurality of vertexes are merged into one when the mesh is reconfigured. Note that the definition reducing unit may remove or merge vertexes configuring some of vertex pairs as the patch boundary decimation.

It is assumed that a patch A and a patch B are present as illustrated on the left side in Fig. 6, for example. In this example, vertexes A1 to A5 are present at edges of the boundary of the patch A, and vertexes B 1 to B5 are present at edges of the boundary of the patch B. Also, it is assumed that the vertexes A1 to A5 and the vertexes B 1 to B5 are linked to each other as two-way arrows P1 to P5 of the dotted lines. Such a relationship illustrated by the two-way arrows P1 to P5 of the dotted lines will also be referred to as vertex pairs. The definition reducing unit decimates the vertexes for each vertex pair. For example, if the vertex pairs P2 and P4 (that is, the vertexes A2 and A4 and the vertexes B2 and B4) are deleted, the vertexes are decimated with the vertex pairs of the patch A and the patch B maintained as illustrated on the right side in Fig. 6. Therefore, since the vertexes at the boundaries correspond between adjacent patches, the decoder can curb occurrence of inconsistency of the patch boundaries at the time of the reconfiguration. Therefore, the encoder and the decoder can curb occurrence of cracking or the like and curb degradation of subjective image quality of the reconfigured object.

Also, the subdividing unit may subdivide polygons of the reconfigured patch images by three-dimensional coordinates (X, Y, Z) as illustrated in Fig. 7, for example, in the information processing device (the decoding device, for example). Moreover, the subdividing unit may subdivide the polygons of the reconfigured patch images by two-dimensional coordinates (U, V). In that case, the subdividing unit may acquire a geometry value at the UV coordinates of the newly generated point and reconfigure three-dimensional position coordinates.

### <Subdividing parameter (#1-2-1)>

Also, the encoder may control subdividing of the decoder using a subdividing parameter as illustrated in the fourth section from the top of the table in Fig. 3 (#1-2-1). In other words, the decoder may perform subdividing on the basis of the subdividing parameter.

For example, the definition reducing unit may generate the subdividing parameter, which is a parameter related to subdividing of the patches in the low-definition vertex connection information, and the meta information coding unit may code meta information including the subdividing parameter in the information processing device (the coding device, for example). Note that the subdividing parameter may be set at an arbitrary timing. For example, the subdividing parameter may be set for each patch, the subdividing parameter may be set for each frame, or the subdividing parameter may be set for each sequence.

Additionally, the subdividing unit may execute the subdividing on the basis of the subdividing parameter included in meta information and related to subdividing of polygons of the reconfigured patch images in the information processing device (the decoding device, for example). Note that the subdividing parameter may be supplied at an arbitrary timing. For example, the subdividing parameter may be supplied for each patch, the subdividing parameter may be supplied for each frame, or the subdividing parameter may be supplied for each sequence.

The subdividing parameter may be any parameter as long as the parameter can be applied to the subdividing. For example, the subdividing parameter may include a subdividing flag indicating whether or not to execute the subdividing. Also, the subdividing parameter may include a subdividing rate indicating a ratio of the numbers of polygons of the patches before and after the subdividing. Moreover, the subdividing parameter may include a definition reducing rate indicating a ratio of the numbers of polygons of the patches before and after definition reduction performed by the definition reducing unit (that is, definition reduction executed at the time of the coding). Moreover, the subdividing parameter may include the number of times of repetitions of the subdividing that designates the number of times the subdividing is to be repeated. Also, the subdividing parameter may include a subdividing method that designates a method of the subdividing.

In addition, the subdividing parameter may be set in any way. For example, the definition reducing unit may generate (set) the subdividing parameter on the basis of the three-dimensional structures of the patches in the original-definition vertex connection information. Alternatively, the definition reducing unit may generate (set) the subdividing parameter on the basis of how large the distortion of the patches is before and after the definition reduction of the original-definition vertex connection information.

### <Subdividing based on geometry image (#1-2-2)>

Also, the decoder may perform the subdividing on the basis of the geometry image as illustrated in the fifth section from the top of the table in Fig. 3 (#1-2-2).

For example, the subdividing unit may execute the subdividing on the basis of pixel values of the geometry image in the information processing device (the decoding device, for example). Also, the subdividing unit may execute the subdividing in a case where a gradient of the depth value in the polygon is equal to or greater than a predetermined threshold value. Moreover, the subdividing unit may execute the subdividing in a case where dispersion of depth values inside the polygon is equal to or greater than a predetermined threshold value.

### <Patch division after definition reduction (#1-3)>

Also, the encoder may generate the low-definition vertex connection information by reducing the definition of the target mesh and dividing the patches as illustrated in the sixth section from the top of the table in Fig. 3. Moreover, the decoder may subdivide the low-definition vertex connection information (#1-3).

For example, the low-definition vertex connection information generation unit may include a definition reducing unit that generates a low-definition mesh by reducing the number of vertexes of the target mesh and a patch dividing unit dividing the low-definition mesh into patches and generating low-definition vertex connection information, and the geometry image generation unit may generate a geometry image using the target mesh and the low-definition vertex connection information in the information processing device (the coding device, for example).

Moreover, the definition reducing unit may generate the low-definition mesh by decimating the vertexes of the target mesh.

As illustrated in Fig. 9, for example, definition reducing processing is performed on the target object (target mesh), and a low-definition object (low-definition mesh) with a lower definition than that of the target object is generated on the coding side. Also, patch division processing is performed on the low-definition object (low-definition mesh), and vertex connection information (low definition, patches) is generated on the coding side. The vertex connection information (low definition, patches) is transmitted to the decoding side. Also, geometry image generation processing is executed using the vertex connection information (low definition, patches) and the target object (target mesh) with the original definition on the coding side. A geometry image (original definition) is thus generated. The geometry image (original definition) is transmitted to the decoding side.

Also, subdividing processing is executed using the vertex connection information (low definition, patches) and the geometry image (original definition), and the vertex connection information (high definition, patches) is generated on the decoding side. Also, mesh reconfiguration processing is executed using the vertex connection information (high definition, patches) and the vertex connection information (original definition, patches), and a high-definition reconfigured object is generated on the decoding side.

In this manner, the encoder and the decoder can curb degradation of coding efficiency while curbing degradation of subjective image quality of the reconfigured mesh.

Note that even in this case (a case where (#1-3) is applied), the encoder may control the subdividing of the decoder using the subdividing parameter similarly to the case of (#1-2). In other words, the decoder may perform the subdividing on the basis of the subdividing parameter. In other words, (#1-2-1) may be applied.

Similarly, even in this case (the case where (#1-3) is applied), the decoder may perform the subdividing on the basis of the geometry image similarly to the case of (#1-2). In other words, (#1-2-2) may be applied.

### <Application of original-definition pixel values based on decimation information (#1-3-1) >

Also, the encoder may apply depth values of the patch images of the target mesh on the basis of decimation information as illustrated in the seventh section from the top of the table in Fig. 3 (#1-3-1).

For example, it is assumed that the polygons illustrated by the thin lines are polygons before the definition reduction (that is, with the original definition) and the polygons illustrated by the thick lines are polygons after the definition reduction (that is, with the low definition) in Fig. 10. In the geometry image (patch images), the polygons with the low definition illustrated by the thick lines have depth values of the polygons of the original definition illustrated by the thin lines. In other words, the depth values of the polygons with the low definition of the patch images are replaced with the depth values of the polygons with the original definition of the target mesh when the geometry image is generated.

As illustrated in Fig. 11, for example, depth value deriving processing is performed using the target object and the vertex connection information (low definition, patches), and the depth values are replaced. Then, geometry image generation processing is performed using the patch images with the replaced depth values, and the geometry image is thereby generated.

The replacement of the depth values (depth value deriving processing) may be performed in accordance with the decimation information (definition reducing information) at the time of the definition reducing processing as illustrated in Fig. 11. The decimation information (definition reducing information) is information indicating correspondences of polygons before and after the definition reducing processing. In other words, the depth values of the polygons after the definition reduction may be replaced with the depth values of the polygons before the definition reduction corresponding to the polygons in accordance with the correspondences of the polygons before and after the definition reducing processing.

For example, the geometry image generation unit may replace the depth value of a first patch image with a low definition with the depth value of a second patch image with an original definition on the basis of the definition reducing information and may generate a geometry image by arranging the first patch image with the replaced depth value in the frame image in the information processing device (the coding device, for example). Note that the first patch image is a patch image derived using the low-definition vertex connection information. Also, the second patch image is a patch image derived using the target mesh. Moreover, the definition reducing information is information indicating correspondences of the polygons before and after the definition reduction performed by the definition reducing unit.

It is possible to more reliably replace the depth values of the polygons with the low definition with the depth values of the polygons with the original definition in the vicinity thereof by performing the processing on the basis of the decimation information in this manner.

Note that the geometry image generation unit may subdivide the first patch image, generate a third patch image with a high definition, and replace a depth value of the third patch image with the depth value of the second patch image. In other words, the depth value deriving processing may be performed after the vertex connection information (low definition, patches) is subdivided into vertex connection information (high definition, patches) in the example in Fig. 11.

In this manner, patch images (depth values) suitable for the shapes of the polygons to be decoded are obtained.

### <Application of original-definition pixel values based on distances (#1-3-2)>

Note that a method of replacing the depth values may be any method and is not limited to that in the aforementioned example. For example, the encoder may apply the depth values of the patch images of the target mesh on the basis of distances as illustrated in the eighth section from the top of the table in Fig. 3 (#1-3-2).

As illustrated in Fig. 12, for example, depth value deriving processing is performed using the target object and the vertex connection information (low definition, patches), and the depth values are replaced. At this time, the depth values may be replaced with those in the vicinity in the three-dimensional coordinate system.

For example, the geometry image generation unit may generate the geometry image by replacing the depth value of the first patch image with the low definition with the depth value of the second patch image with the original definition in the vicinity thereof in the three-dimensional coordinate system and arranging the first patch image with the replaced depth value in the frame image in the information processing device (the coding device, for example). Note that the first patch image is a patch image derived using the low-definition vertex connection information. Also, the second patch image is a patch image derived using the target mesh.

It is possible to replace the depth values of the polygons with the low definition with the depth values of the polygons with the original definition in the vicinity in the three-dimensional space by performing the processing on the basis of the decimation information in this manner.

Note that the geometry image generation unit may subdivide the first patch image, generate the third patch image with the high definition, and replace the depth value of the third patch image with the depth value of the second patch image. In other words, the depth value deriving processing may be performed after the vertex connection information (low definition, patches) is subdivided into the vertex connection information (high definition, patches) similarly to the example in Fig. 11.

In this manner, patch images (depth values) suitable for the shapes of the polygons to be decoded are obtained.

Also, the depth values may be replaced with those in the vicinity in a two-dimensional coordinate system. As illustrated in Fig. 12, for example, projection processing may be performed on each of the target object and the vertex connection information (low definition, patches). Then, the polygons may be projected to a two-dimensional plane (projection plane) as illustrated in Fig. 13 through the projection processing. Furthermore, the depth values may be replaced using the two-dimensional coordinates on the projection plane in the depth value deriving processing.

For example, the geometry image generation unit may generate the geometry image by replacing the depth value of the first patch image with the low definition with the depth value of the second patch image with the original definition in the vicinity in the two-dimensional coordinate systems and arranging the first patch image with the replaced depth value in the frame image in the information processing device (the coding device, for example). Note that the first patch image is a patch image derived using the low-definition vertex connection information. Also, the second patch image is a patch image derived using the target mesh.

It is possible to replace the depth values of the polygons with the low definition with the depth values of the polygons with the original definition in the vicinity in the two-dimensional space by performing the processing on the basis of the decimation information in this manner.

### <Measure for case where original-definition pixel values cannot be applied (#1-3-2-1)>

In the case of a method in which the depth values are replaced with those in the vicinity in the two-dimensional coordinate system as described above, the patch images may be deformed and polygons may be formed in a region where the polygons with the original definition are not present through the definition reducing processing. In a case where the polygons are deformed as in the example in Fig. 10 through the definition reducing processing, for example, a polygon with a low definition is present while no polygon with the original definition is present in the part illustrated with a gray color in Fig. 14. It is thus not possible to replace the depth values.

Processing of setting a depth value for such a region where it is not possible to simply replace the depth values may be performed. For example, a case where it is not possible to apply depth values of the patch images of the target mesh may be addressed as illustrated in the ninth section from the top of the table in Fig. 3 (#1-3-2-1). The method is arbitrary.

For example, the encoder may address this case. For example, in a case where depth values are not present in the vicinity in the two-dimensional coordinate system, the geometry image generation unit may generate a depth value in the vicinity in the two-dimensional coordinate system by dilating the second patch image in the information processing device (the coding device, for example).

Also, the geometry image generation unit may skip (omit) the replacement of the depth values and apply the depth values of the polygons with the low definition in the case where the depth values are not present in the vicinity in the two-dimensional coordinate system.

Moreover, the decoder may address this case. In that case, the encoder may provide information to the decoder such that the decoder can easily identify whether the depth values in the vicinity are present in the two-dimensional coordinate system. As the information, the geometry image generation unit may replace the depth value of the first patch image with a predetermined depth value in the case where the depth values are not present in the vicinity in the two-dimensional coordinate system in the information processing device, for example (the coding device, for example).

Also, the geometry image generation unit may generate an occupancy map indicating a range where the depth value of the first patch image can be replaced, and the geometry image coding unit may code the occupancy map.

In the case where the decoder addresses the case, the patch reconfiguration unit may apply a pixel value of a second pixel to which the depth value of the patch image has been applied (replacement has been able to be performed) with a first pixel to which the depth value has not been applied (replacement has not been able to be performed) in the geometry image in the information processing device (the decoding device, for example).

At that time, the patch reconfiguration unit may determine whether or not the depth value of the patch image has been applied on the basis of differences in pixel values from peripheral pixels.

Also, the patch reconfiguration unit may determine whether or not the depth value of the patch image has been applied on the basis of a difference from a depth value at the same position in the patch image with the low definition derived using the low-definition vertex connection information.

Also, the patch reconfiguration unit may determine whether or not the depth value of the patch image has been applied on the basis of a predetermined pixel value (set by the encoder).

Also, the patch reconfiguration unit may determine whether or not the depth value of the patch image has been applied on the basis of the occupancy map (set by the encoder).

Moreover, the patch reconfiguration unit may apply the pixel value of the second pixel located at the closest position to the pixel for which replacement has not been able to be performed.

Also, the patch reconfiguration unit may apply an average of pixel values of a plurality of second pixels in the vicinity of the pixel for which replacement has not been able to be performed to the pixel.

Note that the decoder may address this case (for the patch image) after reconfiguring the patch image. For example, the subdividing unit may apply the pixel value of the second pixel to which the depth value of the second patch image derived using the target mesh has been applied to the first pixel to which the depth value has not been applied in the first patch image obtained through the subdividing in the information processing device (the decoding device, for example).

At that time, the subdividing unit may determine whether or not the depth value of the second patch image has been applied on the basis of differences in pixel values from the peripheral pixels.

Also, the subdividing unit may determine whether or not the depth value of the second patch image has been applied on the basis of a difference from the depth value at the same position in the third patch image derived using the low-definition vertex connection information.

Also, the subdividing unit may determine whether or not the depth value of the second patch image has been applied on the basis of a predetermined pixel value (set by the encoder).

Also, the subdividing unit may determine whether or not the depth value of the second patch image has been applied on the basis of the occupancy map (set by the encoder).

Moreover, the subdividing unit may apply the pixel value of the second pixel located at the closest position to the pixel for which replacement has not been able to be performed.

Additionally, the subdividing unit may apply the average of the pixel values of the plurality of second pixels in the vicinity of the pixel for which replacement has not been able to be performed to the pixel.

### <Patch boundary subdividing control and correction (#1-4)>

Inconsistency of boundaries between patches, such as differences in numbers of vertexes at patch boundaries among patches and deviation of vertex positions, for example, may occur due to subdividing processing or the like on the decoding side, for example. Therefore, cracking (gaps) may occur or texture deviation may occur in the mesh reconfigured through the mesh reconfiguration processing on the decoding side. Thus, performing boundary vertex correction processing of correcting vertexes at patch boundaries on the reconfigured mesh after the subdividing processing and the mesh reconfiguration processing as illustrated in Fig. 15 on the decoding side has been considered.

Content of the boundary vertex correction processing (method for the correction) is arbitrary. Examples thereof include zippering. When a patch A and a patch B are connected as illustrated on the left side in Fig. 16 in the zippering, vertexes (boundary vertexes B1, B2, and B3) located at the boundary of the patch B corresponding to vertexes (boundary vertexes A1, A2, A3) located at the boundary of the patch A are searched for. Then, the patch A and the patch B are connected such that each vertex of the patch A and each vertex of the patch B corresponding to each other in the correspondence (P 1, P2, P3) are combined into one as illustrated on the right side in Fig. 16. In this manner, it is possible to curb occurrence of cracking and texture deviation.

However, there has been a case where the corresponding vertexes cannot be discovered even through the zippering and the patches cannot be accurately connected. In a case where the boundary vertexes B4 and B5 are added only to the patch B through the subdividing processing as illustrated on the left side in Fig. 17, for example, the numbers of vertexes at the boundary of the patch A and the boundary of the patch B are not the same. Therefore, it is difficult to accurately generate correspondences even through zippering. Also, there is a concern that cracking may occur as illustrated on the right side in Fig. 17 due to positional deviation occurring at the boundary vertexes B4 and B5, for example.

Thus, patch boundary subdividing performed by the decoder may be controlled, or processing results may be corrected as illustrated in the tenth section from the top of the table in Fig. 3, for example, to prevent such degradation of subjective image quality of the mesh in this manner (#1-4).

### <Patch boundary subdividing control using boundary subdividing flag (#1-4-1)>

The encoder may control the patch boundary subdividing performed by the decoder through transmission of a boundary subdividing flag as illustrated in the eleventh section from the top of the table in Fig. 3 (#1-4-1).

For example, in the information processing device (the decoding device, for example) that generates the vertex connection information (low definition, patches) by dividing the target mesh (original definition) into patches and reducing the definition, the definition reducing unit may generate a boundary subdividing flag indicating whether or not to subdivide a patch boundary, and the meta information coding unit may code meta information including the boundary subdividing unit.

Also, the definition reducing unit may appropriately execute patch boundary decimation and intra-patch decimation for each patch included in the original-definition vertex connection information and set the aforementioned boundary subdividing flag described above to true for each patch on which the patch boundary decimation has been executed. Note that the patch boundary decimation is processing of decimating vertexes at the patch boundaries. Also, the intra-patch decimation is processing of decimating vertexes inside the patches.

Moreover, the boundary subdividing flag may be set to true for the patches on which the definition reducing unit has executed the definition reduction such that the definition reducing rate is equal to or greater than a predetermined threshold value. Note that the definition reducing rate is a parameter indicating a ratio of the numbers of polygons of the patches before and after the definition reduction.

For example, in the information processing device (the decoding device, for example) that generates the vertex connection information (low definition, patches) by reducing the definition of the target mesh (original definition) and dividing it into patches, the definition reducing unit may generate a boundary subdividing flag indicating whether to subdivide a patch boundary, and the meta information coding unit may code meta information including the boundary subdividing flag.

Also, the boundary subdividing flag may be set to true in a case where the definition reducing unit has executed definition reduction such that the definition reducing rate is equal to or greater than a predetermined threshold value. Note that the definition reducing rate is a parameter indicating a ratio of the numbers of polygons of the target mesh and the low-definition mesh.

Also, in a case where the boundary subdividing flag has been transmitted from the encoder as described above, for example, and the boundary subdividing flag indicating whether or not to subdivide a patch boundary and included in the meta information is true, the subdividing unit may subdivide the boundary in the information processing device (the decoding device, for example).

In this manner, it is possible to curb an increase in load of processing on the boundary vertexes that have increased through the division performed by the decoder.

### <Expanding of zippering search range (#1-4-2)>

The decoder may expand the zippering search range as illustrated in the twelfth section from the top of the table in Fig. 3 (#1-4-2).

For example, the boundary vertex correction unit may correct the vertexes through zippering and also perform vertex search in the zippering in the mesh surface direction in the information processing device (the decoding device, for example).

In this manner, it is possible to more reliably take a measure for the boundary vertexes. Also, it is possible to subdivide the boundaries. Therefore, it is possible to curb degradation of subjective image quality of the reconfigured mesh. Also, since it is not necessary to transmit information for the correction, it is possible to curb degradation of coding efficiency.

### <Holding vertex UV as non-integer (#1-4-3)>

For example, the decoder may hold the vertex UV as a non-integer as illustrated in the thirteenth section from the top of the table in Fig. 3 (#1-4-3).

For example, the boundary vertex correction unit may process two-dimensional coordinates of vertexes that have increased through subdividing of the polygons of the patch images as non-integer values in the information processing device (the decoding device, for example).

In this manner, it is possible to more reliably take a measure for the boundary vertexes. Also, it is possible to subdivide the boundaries. Therefore, it is possible to curb degradation of subjective image quality of the reconfigured mesh. Also, since it is not necessary to transmit information for the correction, it is possible to curb degradation of coding efficiency. Moreover, since the corresponding vertex search range is in one direction, it is possible to curb an increase in load of the zippering.

### <Application of pairing (#1-4-4)>

The decoder may apply pairing to the boundary vertex correction processing as illustrated in the fourteenth section from the top of the table in Fig. 3, for example (#1-4-4).

The pairing is processing of connecting patch like zippering. However, in the case of the pairing, corresponding vertexes are merged into one on the basis of pair information transmitted from the encoder. The pair information is information indicating correspondences of vertexes between patches and is generated by the encoder. The encoder obtains the correspondences (P1, P2, and P3) of the vertexes between the patches and generates the pair information as illustrated in Fig. 18, for example.

For example, the encoder executes decoding processing of decoding coded data of vertex connection information, executes subdividing processing of subdividing the obtained low-definition vertex connection information, and executes pair information generation processing of generating pair information in regard to the obtained high-definition vertex connection information for each patch as illustrated in Fig. 19. The encoder codes the obtained pair information as meta information and transmits the meta information to the decoder.

Therefore, the meta information coding unit may decode the coded data of the meta information, subdivide patches included in the low-definition vertex connection information included in the meta information, generate pair information indicating vertex pairs in the subdivided patches, and code the meta information including the pair information in the information processing device, for example (the coding device, for example). Note that the vertex pairs may be configured by a plurality of vertexes of mutually different patches. Also, the plurality of vertexes may be merged into one when the mesh is reconfigured.

On the contrary, the boundary vertex correction unit may correct the vertexes using the pair information included in the meta information in the information processing device, for example (the decoding device, for example). Note that the pair information may indicate vertex pairs configured by a plurality of vertexes of mutually different patches.

The pairing is applied in this manner, and it is thus not necessary for the decoder to search for matching points. Also, it is possible to more reliably merge corresponding vertexes. Therefore, it is possible to curb degradation of subjective image quality of the reconfigured mesh.

### <Dividing patches after boundary vertex correction (#1-4-5)>

The decoder may divide patches after the boundary vertex correction as illustrated in the fifteenth section form the top of the table in Fig. 3 (#1-4-5).

For example, the decoder may execute the boundary vertex correction processing to correct the vertexes at the patch boundaries after executing the mesh reconfiguration processing to reconfigure a low-definition mesh, and then execute subdividing processing to reconfigure a high-definition mesh as illustrated in Fig. 20.

In other words, the mesh reconfiguration unit may further include a boundary vertex correction unit reconfiguring the mesh using the reconfigured patch images and correcting the vertexes at the boundaries of the patches of the reconfigured mesh, and the subdividing unit may subdivide polygons of the meshes with the corrected vertexes at the boundaries in the information processing device, for example (the decoding device, for example).

Note that the boundary vertex correction unit may correct the vertexes through the zippering or the pairing.

Also, the boundary vertex correction unit may further set vertex pairs configured by a plurality of vertexes of mutually different patches and set positions of the vertexes configuring the vertex pairs after the pairing using depth values of the vertexes at the boundaries. For example, the boundary vertex correction unit may set the positions of the vertexes configuring the vertex pairs after the pairing to an average of the positions of the vertexes. In this manner, it is possible to improve positional accuracy of the patch boundaries.

Also, the reconfiguration using the depth values may not be performed for points generated on the boundaries, and changes may not be made from the positions of the points generated through division in the three-dimensional space. Note that the points that have increased through the division are generated on edges after cracking correction. In this manner, matching point determination processing is not needed for the points that have increased through the division, and it is thus possible to curb an increase in load of decoding processing.

### <Correction of vertexes outside projection region (#1-5)(#1-5-1)(#1-5-2)>

If the decoder performs subdividing processing, there is a concern that a case where a UV value of a boundary point that has increased through division is outside a projection region (the region illustrated with the gray color in Fig. 21) like the point with the hatched pattern illustrated in Fig. 21, for example, and it is not possible to acquire an accurate depth value may occur. For example, if a point is generated at a non-integer UV value (a position located across a plurality of grids) through division, the value is changed into an integer and is placed on a grid, distortion in the UV direction occurs, and the UV value becomes a non-projection region. If such a vertex is generated, there is a concern of degradation of subjective image quality such as occurrence of deterioration such as thorn, for example, in the reconfigured mesh.

Thus, the decoder may correct the vertex outside the projection region as illustrated in the sixteenth section from the top of the table in Fig. 3, for example (#1-5). A method for the correction is arbitrary. The encoder may fill the value outside the projection region through dilation of the geometry image as illustrated in the seventeenth section from the top of the table in Fig. 3, for example (#1-5-1).

The geometry image generation unit may execute dilation on a region where no patch image has been arranged in the geometry image in the information processing device, for example (the coding device, for example).

Also, the decoder may acquire a value from the projection region on the basis of an occupancy map as illustrated in the eighteenth section from the top of the table in Fig. 3, for example (#1-5-2).

The subdividing unit may apply a depth value in a region where a patch image is arranged as a depth value of a vertex located outside the region on the basis of an occupancy map indicating the region in the information processing device, for example (the decoding device, for example). For example, vicinity pixels which are true (one, for example) in the occupancy map and have the same patch ID are searched for, and a depth value of a pixel meeting a condition may be applied.

At that time, the subdividing unit may move the vertex (the circle with the hatched pattern in the drawing) located outside the region where the patch images are arranged to inside of the region (the region illustrated with a gray base) as illustrated in Fig. 22, for example. Also, the subdividing unit may update the depth value without moving the vertex located outside the region where the patch image is arranged.

In this manner, it is possible to curb deterioration such as thorn in the reconfigured mesh and to curb degradation of subjective image quality.

### <Expansion of depth value (#1-6)>

Since the depth value is quantized at an integer position when a depth image is generated, a vertex generated from a depth image may include a quantization error in the depth direction. As illustrated in Fig. 23, for example, depth values of all vertexes in a low-definition patch image are assumed to be integer values. In Fig. 23, the vertical direction represents depth values, and dashed-line positions represent integer values.

If the patch image is subdivided to increase vertexes, the depth values of vertexes (white circles in Fig. 24) that have increased become integer values. There is thus a concern that the patch image may be deformed as illustrated in Fig. 24.

Thus, as illustrated in the nineteenth section from the top of the table in Fig. 3, the depth value may be expanded such that the vertex that has increased through the subdividing can take a non-integer value as illustrated in Fig. 25.

The geometry image generation unit may subdivide the patch images of the geometry image, derive a depth value of the vertex that has increased through the subdividing, and store a non-integer part of the depth value in a pixel value of the geometry image in the information processing device, for example (the coding device, for example). Fig. 26 is a diagram illustrating an example of syntax in that case. As illustrated in Fig. 26, the depth value is expanded, and the non-integer part is stored as "extend_depth" in the depth value.

Also, a pixel value of the geometry image may be configured of a first bit length storing an integer part of the depth value and a second bit length storing a non-integer part of the depth value at that time as illustrated in Fig. 26.

On the contrary, the subdividing unit may derive the depth value of the non-integer using the integer part and the non-integer part of the depth value and subdivide the polygon using the depth value of the derived non-integer in the information processing device, for example (the decoding device, for example).

Note that the geometry image generation unit may set the first bit length and the second bit length and generate bit length designation information indicating the first bit length and the second bit length in the information processing device, for example (the coding device, for example). Then, the meta information coding unit may code meta information including the bit length designation information.

Also, the geometry image generation unit may set the first bit length and the second bit length in arbitrary units of data. For example, the first bit length and the second bit length may be set for each patch, each frame, or each sequence.

Note that the non-integer part of the depth value may be stored in a frame that is different from that of the integer part. The geometry image generation unit may store the integer part and the non-integer part of the depth value in mutually different frame images in the geometry image in the information processing device, for example (the coding device, for example).

On the contrary, the subdividing unit may acquire the integer part and the non-integer part of the depth value from mutually different frame images in the geometry image in the information processing device, for example (the decoding device, for example).

Also, the decoder may perform control not to generate vertexes of non-integer depth values by transmitting flag information. The geometry image generation unit may subdivide the patch images of the geometry image, derive depth values of vertexes that have increased through the subdividing, and store non-integer depth value flags in pixels of the geometry image in the information processing device, for example (the coding device, for example). Note that the non-integer depth value flags are flags indicating that the depth values are non-integers. The non-integer depth value flag may be stored in pixels, the depth values of which correspond to the non-integer vertexes.

On the contrary, the subdividing unit may skip (omit) the generation of the vertex at the position where the non-integer depth value flag indicating that the depth value is a non-integer is stored in the patch image in the subdividing in the information processing device, for example (the decoding device, for example).

As described above, it is possible to curb degradation of subjective image quality of the reconfigured mesh due to quantization errors of the added vertexes.

### <Transmission of entire vertex connection information (#1-7)>

Although the vertex connection information for each patch is transmitted from the coding side to the decoding side in the above description, the present invention is not limited to this example, and entire vertex connection information with a low definition may be transmitted as illustrated in the bottom section of the table in Fig. 3, for example.

As illustrated in Fig. 27, for example, a low-definition object (low-definition mesh) on which patch division processing has not been performed may be transmitted to the decoding side. In that case, the patch division processing is performed on the transmitted low-definition object, and low-definition vertex connection information of divided patches is generated on the decoding side as illustrated in Fig. 27. Furthermore, the low-definition vertex connection information of the divided patches and the geometry image (original definition) are used to execute patch position deriving and unpacking processing. In the patch position deriving and unpacking processing, the position (the UV coordinates of a reference point of each patch, for example) of each patch in the geometry image is derived, and each patch image is extracted by the geometry image using the position information. Also, subdividing processing is executed on the extracted patch images, and patch images with a high definition (vertex connection information (high definition, patches)) are obtained. Also, the mesh is reconfigured using the patch images through the mesh reconfiguration processing.

The low-definition vertex connection information may include information indicating vertexes and connections of the entire low-definition mesh with a lower definition than that of the target mesh in the information processing device, for example (the coding device, for example).

Also, the low-definition vertex connection information generation unit may include a definition reducing unit generating a low-definition mesh by reducing the number of vertexes of the target mesh and a patch dividing unit dividing the low-definition mesh into patches and generating low-definition vertex connection information. Then, the geometry image generation unit may generate a geometry image using the target mesh and the low-definition vertex connection information. Moreover, the meta information coding unit may code meta information including the low-definition mesh.

Also, the geometry image generation unit may generate arrangement information indicating the positions where the patches of the low-definition mesh are arranged in the frame image. Also, the meta information coding unit may code meta information including the arrangement information.

On the contrary, the low-definition vertex connection information may include information indicating vertexes and connections of the entire low-definition mesh with a lower definition than that of the target mesh in the information processing device, for example (the decoding device, for example). Also, the patch reconfiguration unit may divide the low-definition vertex connection information for each patch, derive the positions of the patches in the geometry image, and extract patch images from the geometry image.

Moreover, the patch reconfiguration unit may extract the patch images from the geometry image on the basis of the arrangement information included in the meta information and indicating the positions of the patches in the frame images.

In other words, the arrangement information (also referred to as patch position information) indicating the positions where the patches are arranged in the geometry image is transmitted from the coding side to the decoding side as illustrated in Fig. 28 in this case. In other words, the arrangement information (patch position information) includes UV coordinates of a reference point of each patch.

On the decoding side, unpacking processing (extraction of the patch images from the geometry image) is performed using the patch position information. In other words, deriving of the patch positions in the case of Fig. 27 is omitted. Accordingly, it is possible to curb an increase in load of the decoding processing.

### <4. First embodiment>

### <Coding device>

The present technology described above can be applied to an arbitrary device. For example, the present technology can be applied to a coding device 300 as illustrated in Fig. 29. Fig. 29 is a block diagram illustrating an example of a configuration of a coding device which is an embodiment of an information processing device to which the present technology is applied. The coding device 300 illustrated in Fig. 29 is a device that expands the VPCC and codes, by a coding method for a two-dimensional image, 3D data using a mesh as a video frame. Fig. 29 illustrates a configuration example of the coding device 300 in a case where patch division is performed to reduce a definition (#1-2).

Fig. 29 shows principal components such as processing units and data flows, and Fig. 29 does not show all components. Specifically, the coding device 300 may include processing units that are not illustrated as blocks in Fig. 29 and processing and data flows that are not illustrated as arrows or the like in Fig. 29.

As illustrated in Fig. 29, the coding device 300 in this case includes a mesh voxelization unit 311, a patch dividing unit 312, a definition reducing unit 313, a meta information coding unit 314, an image generation unit 315, a 2D coding unit 316, an image generation unit 317, a 2D coding unit 318, and a multiplexing unit 319.

A target mesh 350 (this may be an original mesh) is supplied to the coding device 300. The target mesh 350 includes, for example, a connectivity 351, vertex information 352, a UV map 353, and a texture 354.

The connectivity 351 is information similarly to the connectivity 32 (Fig. 2) and indicates vertexes (vertexes connected to each other) forming polygons for each polygon. The vertex information 352 is information similar to the vertex information 31 (Fig. 2) and indicates coordinates of each vertex forming a mesh. The UV map 353 is information similar to the UV map 34 (Fig. 2) and indicates the position of each vertex on a texture image. The texture 354 is information similar to the texture image 33 (Fig. 2) and indicates a texture attached to the polygon. In other words, the texture 354 is information including the texture image.

The mesh voxelization unit 311 executes processing related to voxelization of the mesh. For example, the mesh voxelization unit 311 may acquire the connectivity 351, the vertex information 352, and the UV map 353 of the target mesh 350. Also, the mesh voxelization unit 311 may convert the coordinates of each vertex included in the acquired vertex information 352 into a voxel grid. Moreover, the mesh voxelization unit 311 may supply the connectivity 351, the vertex information 352 of the voxel grid after the conversion, and the UV map 353 (that is, the target mesh) to the patch dividing unit 312.

The patch dividing unit 312 executes processing related to patch division. For example, the patch dividing unit 312 may acquire the connectivity 351 supplied from the mesh voxelization unit 311, the vertex information 352 of the voxel grid after the conversion, and the UV map 353. Also, the patch dividing unit 312 may divide the target mesh 350 into patches (patch images) on the basis of the acquired information. Moreover, the patch dividing unit 312 may supply the generated patches (patch images) to the definition reducing unit 313, the image generation unit 315, and the image generation unit 317.

The definition reducing unit 313 executes processing related to definition reduction of the patches. For example, the definition reducing unit 313 may acquire patches (patch images) with an original definition supplied from the patch dividing unit 312. Also, the definition reducing unit 313 may reduce the definition (decimation, for example) of the acquired patches (patch images) with the original definition and generate low-definition vertex connection information. Also, the definition reducing unit 313 may supply the low-definition vertex connection information to the meta information coding unit 314.

Note that the patch dividing unit 312 and the definition reducing unit 313 may be integrally configured as a low-definition vertex connection information generation unit 321. The low-definition vertex connection information generation unit 321 performs processing regarding generation of the low-definition vertex connection information. The low-definition vertex connection information is vertex connection information regarding vertexes and connections of the mesh. The low-definition vertex connection information has a lower definition (a smaller number of vertexes) than the target mesh. In other words, the low-definition vertex connection information generation unit 321 may acquire the connectivity 351 supplied from the mesh voxelization unit 311, the vertex information 352 of the voxel grid after conversion, and the UV map 353, for example. Also, the low-definition vertex connection information generation unit 321 may generate low-definition vertex connection information on the basis of the acquired information. Moreover, the low-definition vertex connection information generation unit 321 may generate vertex connection information with the original definition (with the same number of vertexes as that of the target mesh). Also, the low-definition vertex connection information generation unit 321 may supply the generated low-definition vertex connection information to the meta information coding unit 314. Moreover, the low-definition vertex connection information generation unit 321 may supply the generated vertex connection information with the original definition to the image generation unit 315 and the image generation unit 317.

The meta information coding unit 314 executes processing regarding coding of the meta information. For example, the meta information coding unit 314 may acquire the low-definition vertex connection information supplied from the definition reducing unit 313. Also, the meta information coding unit 314 may code meta information including the low-definition vertex connection information and generate coded data of the meta information. Moreover, the meta information coding unit 314 may supply the generated coded data of the meta information to the multiplexing unit 319.

The image generation unit 315 executes processing regarding generation of a geometry image. For example, the image generation unit 315 may acquire the patches (patch images) of the original definition supplied from the patch dividing unit 312. Also, the image generation unit 315 may generate the geometry image by arranging the patches (patch images) on a two-dimensional plane or the like. In other words, the image generation unit 315 may also be called a geometry image generation unit. Also, the image generation unit 315 may supply the generated geometry image as a geometry video frame to the 2D coding unit 316.

The 2D coding unit 316 performs processing regarding coding of a two-dimensional image. For example, the 2D coding unit 316 may acquire the geometry image (geometry video frame) supplied from the image generation unit 315. Also, the 2D coding unit 316 may code the acquired geometry image by a coding scheme for a 2D image and generate coded data of the geometry image. In other words, the 2D coding unit 316 may also be called a geometry image coding unit. In addition, the 2D coding unit 316 may supply the generated coded data of the geometry image to the multiplexing unit 319.

The image generation unit 317 executes processing regarding generation of the texture image. For example, the image generation unit 317 may acquire the patches (patch images) with the original definition supplied from the patch dividing unit 312. Also, the image generation unit 317 may acquire the texture 354 of the target mesh 350. Moreover, the image generation unit 317 may generate the texture image using the information. In other words, the image generation unit 317 may also be called a texture image generation unit. In addition, the image generation unit 317 may supply the generated texture image as a texture video frame to the 2D coding unit 318.

The 2D coding unit 318 performs processing regarding coding of the two-dimensional image. For example, the 2D coding unit 318 may acquire the texture image (texture video frame) supplied from the image generation unit 317. Also, the 2D coding unit 318 may code the acquired texture image by the coding scheme for a 2D image and generate coded data of the texture image. In other words, the 2D coding unit 318 may also be called as a texture image coding unit. Also, the 2D coding unit 318 may supply the generated coded data of the texture image to the multiplexing unit 319.

The multiplexing unit 319 executes processing regarding multiplexing of data. For example, the multiplexing unit 319 may acquire the coded data of the meta information supplied from the meta information coding unit 314. Also, the multiplexing unit 319 may acquire the coded data of the geometry image supplied from the 2D coding unit 316. Also, the multiplexing unit 319 may acquire the coded data of the texture image supplied from the 2D coding unit 318. Moreover, the multiplexing unit 319 may multiplex the acquired data and generate one bitstream. Additionally, the multiplexing unit 319 may provide the generated bitstream to another device. In other words, the multiplexing unit 319 may also be called a providing unit.

The present technology described in <3. Transmission of low-definition vertex connection information and original-definition geometry image> may be applied to the coding device 300 with the configuration as described above.

For example, the low-definition vertex connection information generation unit 321 may generate low-definition vertex connection information, the meta information coding unit 314 may code meta information including the low-definition vertex connection information, the image generation unit 315 may generate a geometry image by arranging patch images of the target mesh in frame images, and the 2D coding unit 316 may code the geometry image in the coding device 300. Additionally, the image generation unit 317 may generate a texture image by arranging the texture of the target mesh in the frame images for each patch, and the 2D coding unit 318 may code the texture image. Also, the low-definition vertex connection information included in the meta information may include information indicating vertexes and connections for each patch. Moreover, the patch dividing unit 312 may divide the target mesh into a plurality of patches and generate original-definition vertex connection information including the information indicating the vertexes and the connections of the target mesh for each patch as the low-definition vertex connection information generation unit 321, and the definition reducing unit 313 may generate low-definition vertex connection information by reducing the vertexes for each patch in the original-definition vertex connection information. Then, the image generation unit 315 may generate the geometry image using the original-definition vertex connection information. It is a matter of course that other present technologies described in <3. Transmission of low-definition vertex connection information and original-definition geometry image> may be applied.

By doing so, the coding device 300 can obtain the effects described above in <3. Transmission of low-definition vertex connection information and original-definition geometry image>. In other words, the coding device 300 can curb degradation of coding efficiency while curbing degradation of subjective image quality.

Note that these processing units (the mesh voxelization unit 311 to the multiplexing unit 319) have any configurations. For example, each of the processing units may be configured with a logical circuit that implements the aforementioned processing. Each of the processing units may have, for example, a central processing unit (CPU), a read only memory (ROM), a random access memory (RAM), and the like, and the aforementioned processing may be implemented by executing a program using them. It goes without saying that each processing unit may have both the aforementioned configurations, realize parts of the aforementioned processing according to a logic circuit, and realize the other part of the processing by executing a program. The processing units may have independent configurations, for example, some processing units may realize parts of the aforementioned processing according to a logic circuit, some other processing units may realize the aforementioned processing by executing a program, and some other processing units may realize the aforementioned processing according to both a logic circuit and execution of a program.

### <Flow of coding processing>

An example of a flow of coding processing executed by the coding device 300 will be described with reference to the flowchart of Fig. 30.

Once the coding processing is started, the mesh voxelization unit 311 converts the target mesh 350 into voxel grids by converting coordinates of each vertex included in the vertex information 352 of the target mesh 350 into voxel grids in Step S301.

In Step S302, the patch dividing unit 312 divides the target mesh 350 converted into the voxel grids into patches.

In Step S303, the definition reducing unit 313 reduces the definition of the patch images (original definition) of the target mesh through decimation, for example.

In Step S304, the meta information coding unit 314 codes the meta information including the vertex connection information in units of patches with the low definition obtained by the processing in Step S303 and generates coded date of the meta information.

In Step S305, the image generation unit 315 arranges the patch images (original definition) of the target mesh in the frame images and generates the geometry image with the original definition.

In Step S306, the 2D coding unit 316 codes the geometry image with the original definition by the coding scheme for a 2D image and generates coded data of the geometry image.

In Step S307, the image generation unit 317 generates a texture image corresponding to the geometry image.

In Step S308, the 2D coding unit 318 codes the texture image generated by the processing in Step S307 and generates coded data of the texture image.

In Step S309, the multiplexing unit 319 multiplexes the coded data of the meta information, the coded data of the geometry image, the coded data of the texture image, and the like and generates one bitstream. Then, the multiplexing unit 319 provides the generated bitstream to another device. In other words, the multiplexing unit 319 provides the coded data of the meta information, the coded data of the geometry image, and the coded data of the texture image.

When the processing of Step S309 ends, the coding processing ends.

In such coding processing, the present technology described in <3. Transmission of low-definition vertex connection information and original-definition geometry image> may be applied similarly to the case of the application to the coding device 300.

For example, the low-definition vertex connection information generation unit 321 may generate low-definition vertex connection information, the meta information coding unit 314 may code meta information including the low-definition vertex connection information, the image generation unit 315 may generate a geometry image by arranging patch images of the target mesh in frame images, and the 2D coding unit 316 may code the geometry image in the coding method. Additionally, the image generation unit 317 may generate a texture image by arranging the texture of the target mesh in the frame images for each patch, and the 2D coding unit 318 may code the texture image. Also, the low-definition vertex connection information included in the meta information may include information indicating vertexes and connections for each patch. Moreover, the patch dividing unit 312 may divide the target mesh into a plurality of patches and generate original-definition vertex connection information including the information indicating the vertexes and the connections of the target mesh for each patch as the low-definition vertex connection information generation unit 321, and the definition reducing unit 313 may generate low-definition vertex connection information by reducing the vertexes for each patch in the original-definition vertex connection information. Then, the image generation unit 315 may generate the geometry image using the original-definition vertex connection information. Also, other present technology may also be applied similarly to the case of the coding device 300.

Therefore, the coding device 300 can obtain the effects described above in <3. Transmission of low-definition vertex connection information and original-definition geometry image> by appropriately applying the present technology and executing each processing step. In other words, the coding device 300 can curb degradation of coding efficiency while curbing degradation of subjective image quality.

### <5. Second embodiment>

### <Coding device>

Also, the present technology can be applied to a coding device 300 with a configuration as illustrated in Fig. 31, for example. Fig. 31 illustrates a configuration example of the coding device 300 in a case where definition reduction and patch division are performed (#1-3).

Fig. 31 shows principal components such as processing units and data flows, and Fig. 31 does not show all components. Specifically, the coding device 300 may include processing units that are not illustrated as blocks in Fig. 31 and processing and data flows that are not illustrated as arrows or the like in Fig. 31.

As illustrated in Fig. 31, the coding device 300 in this case includes a mesh voxelization unit 361, a definition reducing unit 362, a patch dividing unit 363, a meta information coding unit 364, an image generation unit 365, a 2D coding unit 366, an image generation unit 367, a 2D coding unit 368, and a multiplexing unit 369.

The mesh voxelization unit 361 is a processing unit similar to the mesh voxelization unit 311 in Fig. 29 and executes processing regarding voxelization of a mesh. However, the mesh voxelization unit 361 may supply vertex information 352 of voxel grids after conversion and a UV map 353 (that is, a target mesh) to the definition reducing unit 362 and the image generation unit 365.

The definition reducing unit 362 executes processing regarding mesh definition reduction. For example, the definition reducing unit 362 may acquire a target mesh with an original definition supplied from the mesh voxelization unit 361. Also, the definition reducing unit 362 may perform definition reduction (decimation, for example) on the acquired target mesh with the original definition and generate a low-definition mesh. Also, the definition reducing unit 362 may supply the low-definition mesh to the patch dividing unit 363.

The patch dividing unit 363 executes processing regarding patch division. For example, the patch dividing unit 363 may acquire the low-definition mesh supplied from the definition reducing unit 362. Also, the patch dividing unit 363 may divide the acquired low-definition mesh into patches (patch images). Moreover, the patch dividing unit 363 may supply the generated patches with the low definition (that is, the low-definition vertex connection information) to the meta information coding unit 364, the image generation unit 365, and the image generation unit 367.

Note that the definition reducing unit 362 and the patch dividing unit 363 may be integrally configured as a low-definition vertex connection information generation unit 371. The low-definition vertex connection information generation unit 371 performs processing regarding generation of the low-definition vertex connection information. The low-definition vertex connection information is vertex connection information regarding vertexes and connections of the mesh. The low-definition vertex connection information has a lower definition (the number of vertexes is smaller) than the target mesh. In other words, the low-definition vertex connection information generation unit 371 may acquire connectivity 351, vertex information 352 of the voxel grids after conversion, and a UV map 353 (that is, the target mesh) supplied from the mesh voxelization unit 361, for example. Also, the low-definition vertex connection information generation unit 371 may generate the low-definition vertex connection information on the basis of the acquired information. Also, the low-definition vertex connection information generation unit 371 may supply the generated low-definition vertex connection information to the meta information coding unit 364, the image generation unit 365, and the image generation unit 367.

The meta information coding unit 364 is a processing unit similar to the meta information coding unit 314 in Fig. 29 and executes processing regarding coding of the meta information.

The image generation unit 365 is a processing unit similar to the image generation unit 315 in Fig. 29 and executes processing regarding generation of a geometry image. For example, the image generation unit 365 may acquire the low-definition vertex connection information supplied from the patch dividing unit 363. Also, the image generation unit 365 may acquire the target mesh from the mesh voxelization unit 361. Moreover, the image generation unit 365 may generate a geometry image by arranging patches (patch images) with a low definition, the depth value of which has been replaced with the original definition, on the two-dimensional plane or the like using the low-definition vertex connection information and the target mesh. In other words, the image generation unit 365 may also be called a geometry image generation unit. Also, the image generation unit 365 may supply the generated geometry image as a geometry video frame to the 2D coding unit 366.

The 2D coding unit 366 is a processing unit similar to the 2D coding unit 316 in Fig. 29 and performs processing regarding coding of a two-dimensional image.

The image generation unit 367 is a processing unit similar to the image generation unit 317 in Fig. 29 and executes processing regarding generation of a texture image.

The 2D coding unit 368 is a processing unit similar to the 2D coding unit 318 in Fig. 29 and performs processing regarding coding of a two-dimensional image.

The multiplexing unit 369 is a processing unit similar to the multiplexing unit 319 in Fig. 29 and executes processing regarding multiplexing of data. The multiplexing unit 369 may provide the generated bitstream to another device. In other words, the multiplexing unit 369 may also be called a providing unit.

The present technology described in <3. Transmission of low-definition vertex connection information and original-definition geometry image> may be applied to the coding device 300 with the configuration as described above.

For example, the low-definition vertex connection information generation unit 371 may generate low-definition vertex connection information, the meta information coding unit 364 may code meta information including the low-definition vertex connection information, the image generation unit 365 may generate a geometry image by arranging patch images of the target mesh in frame images, and the 2D coding unit 366 may code the geometry image in the coding device 300. Additionally, the image generation unit 367 may generate a texture image by arranging the texture of the target mesh in the frame images for each patch, and the 2D coding unit 368 may code the texture image. Also, the low-definition vertex connection information included in the meta information may include information indicating vertexes and connections for each patch. Also, the definition reducing unit 362 may generate a low-definition mesh by reducing the vertexes of the target mesh, and the patch dividing unit may divide the low-definition mesh into patches and generate low-definition vertex connection information as the low-definition vertex connection information generation unit 371. Then, the image generation unit 365 may generate a geometry image using the target mesh and the low-definition vertex connection information. It is a matter of course that other present technologies described in

### <3. Transmission of low-definition vertex connection information and original-definition geometry image> may be applied.

In this manner, the coding device 300 may obtain the effects described above in <3. Transmission of low-definition vertex connection information and original-definition geometry image>. In other words, the coding device 300 can curb degradation of coding efficiency while curbing degradation of subjective image quality.

Note that these processing units (the mesh voxelization unit 361 to the multiplexing unit 369) have any configurations. For example, each of the processing units may be configured with a logical circuit that implements the aforementioned processing. Each of the processing units may have, for example, a central processing unit (CPU), a read only memory (ROM), a random access memory (RAM), and the like, and the aforementioned processing may be implemented by executing a program using them. It goes without saying that each processing unit may have both the aforementioned configurations, realize parts of the aforementioned processing according to a logic circuit, and realize the other part of the processing by executing a program. The processing units may have independent configurations, for example, some processing units may realize parts of the aforementioned processing according to a logic circuit, some other processing units may realize the aforementioned processing by executing a program, and some other processing units may realize the aforementioned processing according to both a logic circuit and execution of a program.

### <Flow of coding processing>

An example of a flow of coding processing executed by the coding device 300 in this case will be described with reference to the flowchart of Fig. 32.

Once the coding processing is started, the processing in Step S351 is executed similarly to the processing in Step S301 in Fig. 30.

In Step S352, the definition reducing unit 362 reduces the definition of the target mesh.

In Step S353, the patch dividing unit 363 divides the low-definition mesh obtained by the processing in Step S352 into patches.

Processing in Step S354 is executed similarly to the processing in Step S304 in Fig. 30.

In Step S355, the image generation unit 365 generates the geometry image with the original definition using the vertex connection information in units of patches with the low definition and the target mesh.

The processing of Step S356 to Step S359 is executed in the same manner as the processing of Step S306 to Step S309 in Fig. 30.

When the processing of Step S359 ends, the coding processing ends.

In such coding processing, the present technology described in <3. Transmission of low-definition vertex connection information and original-definition geometry image> may be applied similarly to the case of the application to the coding device 300.

For example, the low-definition vertex connection information generation unit 371 may generate low-definition vertex connection information, the meta information coding unit 364 may code meta information including the low-definition vertex connection information, the image generation unit 365 may generate a geometry image by arranging patch images of the target mesh in frame images, and the 2D coding unit 366 may code the geometry image in the coding method. Additionally, the image generation unit 367 may generate a texture image by arranging the texture of the target mesh in the frame images for each patch, and the 2D coding unit 368 may code the texture image. Also, the low-definition vertex connection information included in the meta information may include information indicating vertexes and connections for each patch. Moreover, the definition reducing unit 362 may generate a low-definition mesh by reducing the vertexes of the target mesh, and the patch dividing unit may divide the low-definition mesh into patches and generate the low-definition vertex connection information and the low-definition vertex connection information generation unit 371. Then, the image generation unit 365 may generate a geometry image using the target mesh and the low-definition vertex connection information. Also, other present technology may also be applied similarly to the case of the coding device 300.

Therefore, the coding device 300 can obtain the effects described above in <3. Transmission of low-definition vertex connection information and original-definition geometry image> by appropriately applying the present technology and executing each processing step. In other words, the coding device 300 can curb degradation of coding efficiency while curbing degradation of subjective image quality.

### <6. Third embodiment>

### <Decoding device>

The present technology can be applied to a decoding device 400 as illustrated in Fig. 33, for example. Fig. 33 is a block diagram illustrating an example of a configuration of a decoding device according to an aspect of an image processing device to which the present technology is applied. The decoding device 400 illustrated in Fig. 33 is a device that decodes coded data, which has been obtained by expanding the VPCC and coding 3D data using a mesh as a video frame by a coding method for a two-dimensional image, by a decoding method for a two-dimensional image and generates (reconfigures) 3D data using the mesh. The decoding device 400 is a configuration example in a case where patch division is performed and definition reduction is then performed (#1-2) and in a case where definition reduction is performed and patch division is then performed (#1-3). In other words, the decoding device 400 in Fig. 33 is compatible with both the coding device 300 in Fig. 29 and the coding device 300 in Fig. 31.

Fig. 33 shows principal components such as processing units and data flows, and Fig. 33 does not show all components. Specifically, the decoding device 400 may include processing units that are not illustrated as blocks in Fig. 33 and processing and data flows that are not illustrated as arrows or the like in Fig. 33.

The decoding device 400 as illustrated in Fig. 33 includes a demultiplexing unit 411, a meta information decoding unit 412, a 2D decoding unit 413, a 2D decoding unit 414, a patch reconfiguration unit 415, a subdividing unit 416, a mesh reconfiguration unit 417, and a boundary vertex correction unit 418.

The demultiplexing unit 411 executes processing regarding demultiplexing of separating multiplexed data. For example, the demultiplexing unit 411 may acquire a bitstream input to the decoding device 400. The bitstream is a bitstream generated by the coding device 300, for example, as described above in the first embodiment and is obtained by expanding the VPCC and coding the 3D data using the mesh.

The demultiplexing unit 411 demultiplexes the bitstream and acquires coded data that is included in the bitstream. For example, the demultiplexing unit 411 acquires coded data of meta information, coded data of a geometry image, and coded data of a texture image through the demultiplexing. Therefore, the demultiplexing unit 411 may also be called an acquisition unit.

The demultiplexing unit 411 supplies the coded data of the meta information to the meta information decoding unit 412. Also, the demultiplexing unit 411 supplies the coded data of the geometry image to the 2D decoding unit 413. Moreover, the demultiplexing unit 411 supplies the coded data of the texture image to the 2D decoding unit 414.

The meta information decoding unit 412 executes processing regarding decoding of the coded data of the meta information. For example, the meta information decoding unit 412 may acquire the coded data of the meta information supplied from the demultiplexing unit 411. Also, the meta information decoding unit 412 may decode the coded data of the meta information by the decoding scheme for a 2D image and generate (restore) the meta information. The meta information includes the low-definition vertex connection information. Also, the meta information decoding unit 412 may supply the meta information to the patch reconfiguration unit 415.

The 2D decoding unit 413 executes processing regarding decoding of coded data of a 2D image (geometry image). In other words, the 2D decoding unit 413 may also be called a geometry image decoding unit. For example, the 2D decoding unit 413 may acquire the coded data of the geometry image supplied from the demultiplexing unit 411. Also, the 2D decoding unit 413 may decode the coded data of the geometry image by the decoding scheme for a 2D image and generate (restore) the geometry image. Also, the 2D decoding unit 413 may supply the generated geometry image to the patch reconfiguration unit 415.

The 2D decoding unit 414 executes processing regarding decoding of the coded data of the 2D image (texture image). In other words, the 2D decoding unit 414 may also be called a texture image decoding unit. For example, the 2D decoding unit 414 may acquire the coded data of the texture image supplied from the demultiplexing unit 411. Also, the 2D decoding unit 414 may decode the coded data of the texture image by the decoding scheme for a 2D image and generate (restore) the texture image. Moreover, the 2D decoding unit 414 may output the generated texture image as a texture 454 configuring the reconfigured mesh 450 to the outside of the decoding device 400.

The patch reconfiguration unit 415 executes processing regarding patch reconfiguration. For example, the patch reconfiguration unit 415 may acquire meta information supplied from the meta information decoding unit 412. The meta information includes, for example, low-definition vertex connection information. Also, the patch reconfiguration unit 415 may acquire a geometry image supplied from the 2D decoding unit 413. Moreover, the patch reconfiguration unit 415 may reconfigure patches (patch images) using the data. Additionally, the patch reconfiguration unit 415 may supply the reconfigured patches (patch images) and the meta information to the subdividing unit 416.

The subdividing unit 416 performs processing regarding subdividing. For example, the subdividing unit 416 may acquire the patches (patch images) and the meta information supplied from the patch reconfiguration unit 415. Also, the subdividing unit 416 may subdivide (subdivision, for example) the acquired patches (patch images). Moreover, the subdividing unit 416 may supply the patches (patch images) with a high definition obtained through the subdivision, the meta information, and the like to the mesh reconfiguration unit 417.

Furthermore, the subdividing unit 416 may generate connectivity 451 configuring the reconfigured mesh 450 and output the connectivity 451 to the outside of the decoding device 400. Also, the subdividing unit 416 may generate a UV map 452 configuring the reconfigured mesh 450 and output the UV map 452 to the outside of the decoding device 400.

The mesh reconfiguration unit 417 executes processing regarding mesh reconfiguration. For example, the mesh reconfiguration unit 417 may acquire the patches (patch images) and the meta information supplied from the subdividing unit 416. Also, the mesh reconfiguration unit 417 may reconfigure a mesh with a high definition and restore three-dimensional coordinates of each vertex on the basis of the acquired information. Moreover, the mesh reconfiguration unit 417 may supply the reconfigured mesh to the boundary vertex correction unit 418.

The boundary vertex correction unit 418 performs processing regarding correction of vertexes on patch boundaries. For example, the boundary vertex correction unit 418 may acquire the mesh (reconfigured mesh) supplied from the mesh reconfiguration unit 417. Also, the boundary vertex correction unit 418 may perform processing such as zippering, for example, and correct the vertexes on the patch boundaries included in the reconfigured mesh. Moreover, the boundary vertex correction unit 418 may generate vertex information corresponding to the mesh after the correction, that is, vertex information 453 configuring the reconfigured mesh 450 and output the vertex information 453 to the outside of the decoding device 400.

The present technology described in <3. Transmission of low-definition vertex and connection information and original-definition geometry image> may be applied to the decoding device 400 with the configuration as described above.

For example, the meta information decoding unit 412 may decode coded data of meta information including low-definition vertex connection information, the 2D decoding unit 413 may decode coded data of a geometry image in which patch images of a target mesh are arranged in frame images, the patch reconfiguration unit 415 may reconfigure the patch images using the low-definition vertex connection information and the geometry image, the subdividing unit 416 may subdivide polygons of the reconfigured patch images, and the mesh reconfiguration unit 417 may reconfigure the mesh using the subdivided patch images in the decoding device 400. It is a matter of course that other present technologies described in <3. Transmission of low-definition vertex connection information and original-definition geometry image> may be applied.

By doing so, the decoding device 400 can obtain the effects described above in <3. Transmission of low-definition vertex connection information and original-definition geometry image>. In other words, the decoding device 400 can curb degradation of coding efficiency while curbing degradation of subjective image quality.

Note that these processing units (the demultiplexing unit 411 to the boundary vertex correction unit 418) have arbitrary configurations. For example, each processing unit may be configured as a logic circuit for realizing the aforementioned processing. Each of the processing units may include, for example, a CPU, a ROM, and a RAM or the like and may implement the foregoing processing by executing a program using the CPU, the ROM, and the RAM or the like. It goes without saying that each of the processing units may have both of the aforementioned configurations, a part of the processing may be implemented by a logic circuit, and the other part of the processing may be implemented by executing a program. The processing units may have independent configurations, for example, some processing units may realize parts of the aforementioned processing according to a logic circuit, some other processing units may realize the aforementioned processing by executing a program, and some other processing units may realize the aforementioned processing according to both a logic circuit and execution of a program.

### <Flow of decoding processing>

An example of a flow of decoding processing executed by the decoding device 400 will be described with reference to the flowchart of Fig. 34.

Once the decoding processing is started, the demultiplexing unit 411 demultiplexes a bitstream input to the decoding device 400 in Step S401.

In Step S402, the meta information decoding unit 412 decodes coded data of meta information including vertex connection information for each patch with a low definition.

In Step S403, the 2D decoding unit 413 decodes coded data of a geometry image with an original definition.

In Step S404, the 2D decoding unit 414 decodes coded data of a texture image.

In Step S405, the patch reconfiguration unit 415 reconfigures patch images using the vertex connection information for each patch with the low definition and the geometry image with the original definition.

In Step S406, the subdividing unit 406 subdivides the reconfigured patch images and generates connection information (connectivity) with a high definition and a UV map.

In Step S407, the mesh reconfiguration unit 417 reconfigures the mesh using the patch images with the high definition and generates vertex information with a high definition.

In Step S408, the boundary vertex correction unit 418 corrects vertexes (boundary vertexes) on the patch boundaries included in the reconfigured mesh (vertex information).

When the processing of Step S408 ends, the decoding processing ends.

In such decoding processing, the present technology described in <3. Transmission of low-definition vertex connection information and original-definition geometry image> may be applied similarly to the case of the application to the decoding device 400.

For example, the meta information decoding unit 412 may decode the coded data of the meta information including the low-definition vertex connection information, the 2D decoding unit 413 may decode the coded data of the geometry image in which the patch images of the target mesh are arranged in the frame images, the patch reconfiguration unit 415 may reconfigure the patch images using the low-definition vertex connection information and the geometry image, the subdividing unit 416 may subdivide the polygons of the reconfigured patch images, and the mesh reconfiguration unit 417 may reconfigure the mesh using the subdivided patch images in the decoding method. It is a matter of course that other present technologies described in <3. Transmission of low-definition vertex connection information and original-definition geometry image> may be applied.

Therefore, the decoding device 400 can obtain the effects described above in <3. Transmission of low-definition vertex connection information and original-definition geometry image> by appropriately applying the present technology and executing each processing step. In other words, the decoding device 400 can curb degradation of coding efficiency while curbing degradation of subjective image quality.

### <7. Fourth embodiment>

### <Coding device>

Also, the present technology can be applied to a coding device 300 with a configuration as illustrated in Fig. 35, for example. Fig. 35 illustrates a configuration example of the coding device 300 in a case in which entire vertex connection information with a low definition is transmitted (#1-7).

Fig. 35 shows principal components such as processing units and data flows, and Fig. 35 does not show all components. Specifically, the coding device 300 may include processing units that are not illustrated as blocks in Fig. 35 and processing and data flows that are not illustrated as arrows or the like in Fig. 35.

As illustrated in Fig. 35, the coding device 300 in this case has a configuration that is basically similar to that in the case of Fig. 32. However, in the case of the example in Fig. 35, the definition reducing unit 362 may supply entire low-definition vertex connection information (that is, the low-definition mesh) to the meta information coding unit 364 instead of the patch dividing unit 363 supplying the low-definition vertex connection information for each patch to the meta information coding unit 364.

The meta information coding unit 364 may code the meta information including the low-definition mesh (entire low-definition vertex connection information) and generate coded data of the meta information. Moreover, the meta information coding unit 364 may supply the generated coded data of the meta information to the multiplexing unit 369.

The present technology described in <3. Transmission of low-definition vertex connection information and original-definition geometry image> may be applied to the coding device 300 with the configuration as described above.

For example, the low-definition vertex connection information generation unit 371 may generate low-definition vertex connection information, the meta information coding unit 364 may code meta information including the low-definition vertex connection information, the image generation unit 365 may generate a geometry image by arranging patch images of the target mesh in frame images, and the 2D coding unit 366 may code the geometry image in the coding device 300. Also, the low-definition vertex connection information included in the meta information may include information indicating vertexes and connections in the entire low-definition mesh with a lower definition than that of the target mesh. Moreover, the definition reducing unit 362 may generate the low-definition mesh by reducing the vertexes of the target mesh, and the patch dividing unit 363 may divide the low-definition mesh into patches and generate low-definition vertex connection information as the low-definition vertex connection information generation unit 371. Then, the image generation unit 365 may generate a geometry image using the target mesh and the low-definition vertex connection information. Also, the meta information coding unit 364 may code the meta information including the low-definition mesh. Moreover, the image generation unit 365 may generate arrangement information indicating the positions where the patches of the low-definition mesh are arranged in the frame images. Then, the meta information coding unit 364 may code meta information including the arrangement information. It is a matter of course that other present technologies described in <3. Transmission of low-definition vertex connection information and original-definition geometry image> may be applied.

By doing so, the coding device 300 can obtain the effects described above in <3. Transmission of low-definition vertex connection information and original-definition geometry image>. In other words, the coding device 300 can curb degradation of coding efficiency while curbing degradation of subjective image quality in this case as well.

### <Flow of coding processing>

An example of a flow of coding processing executed by the coding device 300 will be described with reference to the flowchart of Fig. 36.

Once the coding processing is started, the processing in Step S501 and Step S502 is performed similarly to each of processing steps in Steps S351 and S352 in Fig. 32.

In Step S503, the meta information coding unit 364 codes the meta information including the entire vertex connection information (that is, the low-definition mesh) with the low definition generated through the processing in Step S502.

Each of the processing steps in Steps S504 to S509 is executed similarly to each of the processing steps in Step S353 and Steps S355 to S359 in Fig. 32.

When the processing of Step S509 ends, the coding processing ends.

In such coding processing, the present technology described in <3. Transmission of low-definition vertex connection information and original-definition geometry image> may be applied similarly to the case of the application to the coding device 300.

For example, the low-definition vertex connection information generation unit 371 may generate low-definition vertex connection information, the meta information coding unit 364 may code meta information including the low-definition vertex connection information, the image generation unit 365 may generate a geometry image by arranging patch images of the target mesh in frame images, and the 2D coding unit 366 may code the geometry image in the coding method. Also, the low-definition vertex connection information included in the meta information may include information indicating vertexes and connections in the entire low-definition mesh with a lower definition than that of the target mesh. Moreover, the definition reducing unit 362 may generate the low-definition mesh by reducing the vertexes of the target mesh, and the patch dividing unit 363 may divide the low-definition mesh into patches and generate low-definition vertex connection information as the low-definition vertex connection information generation unit 371. Then, the image generation unit 365 may generate a geometry image using the target mesh and the low-definition vertex connection information. Also, the meta information coding unit 364 may code the meta information including the low-definition mesh. Moreover, the image generation unit 365 may generate arrangement information indicating the positions where the patches of the low-definition mesh are arranged in the frame images. Then, the meta information coding unit 364 may code meta information including the arrangement information. Also, other present technology may also be applied similarly to the case of the coding device 300.

Therefore, the coding device 300 can obtain the effects described above in <3. Transmission of low-definition vertex connection information and original-definition geometry image> by appropriately applying the present technology and executing each processing step. In other words, the coding device 300 can curb degradation of coding efficiency while curbing degradation of subjective image quality in this case as well.

### <8. Fifth embodiment>

### <Decoding device>

Also, the present technology can be applied to a decoding device 400 with a configuration as illustrated in Fig. 37, for example. Fig. 37 illustrates a configuration example of the decoding device 400 in a case where entire vertex connection information with a low definition is transmitted (#1-7).

Fig. 37 shows principal components such as processing units and data flows, and Fig. 37 does not show all components. Specifically, the decoding device 400 may include processing units that are not illustrated as blocks in Fig. 37 and processing and data flows that are not illustrated as arrows or the like in Fig. 37.

As illustrated in Fig. 37, the decoding device 400 in this case has a configuration that is basically similar to that in the case of Fig. 33. However, in the case of the example in Fig. 37, a patch dividing unit 461 and a patch position information deriving and unpacking unit 462 are included instead of the patch reconfiguration unit 415 in Fig. 33.

The patch dividing unit 461 executes processing regarding patch division. For example, the patch dividing unit 461 acquires meta information supplied from the meta information decoding unit 412. The meta information includes entire vertex connection information (that is, the low-definition mesh) with a low-definition, for example. Also, the patch dividing unit 461 may divide the low-definition mesh into patches (patch images). Moreover, the patch dividing unit 461 may supply the meta information including the patches (patch images) with the low definition to the patch position information deriving and unpacking unit 462.

The patch position information deriving and unpacking unit 462 executes processing regarding deriving of the patch positions on the geometry image, processing regarding extraction of the patch images from the geometry image, and the like. For example, the patch position information deriving and unpacking unit 462 may acquire the meta information including the patches (patch images) with the low definition supplied from the patch dividing unit 461. Also, the patch position information deriving and unpacking unit 462 may acquire the geometry image supplied from the 2D decoding unit 413. Moreover, the patch position information deriving and unpacking unit 462 may derive the positions of the patches in the geometry image. Furthermore, the patch position information deriving and unpacking unit 462 may extract the patch images arranged in the geometry image. Moreover, the patch position information deriving and unpacking unit 462 may supply the extracted patch image to the subdividing unit 416. The patch images are obtained by replacing the depth value of the patch images with the low definition with the depth value of the original definition (the pixel value of the geometry image).

The present technology described in <3. Transmission of low-definition vertex connection information and original-definition geometry image> may be applied to the decoding device 400 with the configuration as described above.

For example, the meta information decoding unit 412 may decode coded data of meta information including low-definition vertex connection information, the 2D decoding unit 413 may decode coded data of a geometry image in which patch images of a target mesh are arranged in frame images, the patch reconfiguration unit 415 may reconfigure the patch images using the low-definition vertex connection information and the geometry image, the subdividing unit 416 may subdivide polygons of the reconfigured patch images, and the mesh reconfiguration unit 417 may reconfigure the mesh using the subdivided patch images in the decoding device 400. Also, the low-definition vertex connection information included in the meta information may include information indicating vertexes and connections in the entire low-definition mesh with a lower definition than that of the target mesh. Also, the patch dividing unit 461 may divide the low-definition vertex connection information for each patch, and the patch position deriving and unpacking unit 462 may derive the positions of the patches in the geometry image and extract the patch images from the geometry image. Moreover, the patch position deriving and unpacking unit 462 may extract the patch images from the geometry image on the basis of arrangement information included in the meta information and indicating the positions of the patches in the frame images. It is a matter of course that other present technologies described in <3. Transmission of low-definition vertex connection information and original-definition geometry image> may be applied.

By doing so, the decoding device 400 can obtain the effects described above in <3. Transmission of low-definition vertex connection information and original-definition geometry image>. In other words, the decoding device 400 can curb degradation of coding efficiency while curbing degradation of subjective image quality in this case as well.

### <Flow of decoding processing>

An example of a flow of decoding processing executed by the decoding device 400 in this case will be described with reference to the flowchart in Fig. 38.

Once the decoding processing is started, the processing in Step S601 is executed similarly to the processing in Step S401 in Fig. 34.

In Step S602, the meta information decoding unit 412 decodes coded data of meta information including entire vertex connection information with a low definition (that is, a low-definition mesh).

Once the processing in Step S602 ends, each of the processing steps in Steps S603 and S604 is executed similarly to each of the processing steps in Steps S403 and S404 in Fig. 34.

In Step S605, the patch dividing unit 461 divides the entire vertex connection information with the low definition (that is, the low-definition mesh) included in the meta information into patches (patch images).

In Step S606, the patch position information deriving and unpacking unit 462 derives the patch positions using the vertex connection information for each patch with a low definition and the geometry image with the original definition.

In Step S607, the patch position information deriving and unpacking unit 462 reconfigures the patch images using the vertex connection information for each patch with the low definition and the geometry image with the original definition. In other words, the patch position information deriving and unpacking unit 462 extracts the patch images arranged in the geometry image.

Once the processing in Step S607 ends, each of the processing steps in Steps S608 to S610 is executed similarly to each of the processing steps in Steps S406 to S408 in Fig. 34.

When the processing of Step S610 ends, the decoding processing ends.

In such decoding processing, the present technology described in <3. Transmission of low-definition vertex connection information and original-definition geometry image> may be applied similarly to the case of the application to the decoding device 400.

For example, the meta information decoding unit 412 may decode the coded data of the meta information including the low-definition vertex connection information, the 2D decoding unit 413 may decode the coded data of the geometry image in which the patch images of the target mesh are arranged in the frame images, the patch reconfiguration unit 415 may reconfigure the patch images using the low-definition vertex connection information and the geometry image, the subdividing unit 416 may subdivide the polygons of the reconfigured patch images, and the mesh reconfiguration unit 417 may reconfigure the mesh using the subdivided patch images in the decoding method. Also, the low-definition vertex connection information included in the meta information may include information indicating vertexes and connections in the entire low-definition mesh with a lower definition than that of the target mesh. Also, the patch dividing unit 461 may divide the low-definition vertex connection information for each patch, and the patch position deriving and unpacking unit 462 may derive the positions of the patches in the geometry image and extract the patch images from the geometry image. Moreover, the patch position deriving and unpacking unit 462 may extract the patch images from the geometry image on the basis of arrangement information included in the meta information and indicating the positions of the patches in the frame images. It is a matter of course that other present technologies described in <3. Transmission of low-definition vertex connection information and original-definition geometry image> may be applied.

Therefore, the decoding device 400 can obtain the effects described above in <3. Transmission of low-definition vertex connection information and original-definition geometry image> by appropriately applying the present technology and executing each processing step. In other words, the decoding device 400 can curb degradation of coding efficiency while curbing degradation of subjective image quality in this case as well.

### <9. Supplement>

### <Application examples>

Note that although the case in which the position of the geometry in the geometry image and the position of the texture in the texture image are mutually the same has been described above, these positions may not be mutually the same. In such a case, a UV map indicating a correspondence between the geometry image and the texture image may be transmitted from the coding side to the decoding side.

### <Coding scheme>

Although the case in which the 3D data using the mesh is coded by expanding the standard called VPCC has been described above, Visual Volumetric Video-based Coding (V3C) or a metadata immersive video (MIV) may be applied instead of the VPCC. The V3C and the MIV are standards using coding technologies that are substantially similar to that of the VPCC and can code 3D data using a mesh through expansion similarly to the case of the VPCC. Therefore, it is possible to apply the present technology described above in the case in which the V3C or the MIV is applied to coding of 3D data using a mesh as well.

### <3D data>

Although the cases in which the present technology is applied to coding and decoding of a mesh have been described above, the present technology is not limited to these examples and can be applied to coding and decoding of 3D data based on arbitrary standards. In other words, various types of processing such as coding/decoding methods, and specifications of various types of data such as 3D data and meta data may be arbitrary as long as they do not contradict the above-described present technology. In addition, the above-described some processing and specifications may be omitted as long as it does not contradict the present technology.

### <Computer>

The above-described series of processing can be executed by hardware or software. When the series of processing is executed by software, a program that constitutes the software is installed on a computer. Here, the computer includes, for example, a computer built in dedicated hardware and a general-purpose personal computer on which various programs are installed to be able to execute various functions.

Fig. 39 is a block diagram illustrating an example of a hardware configuration of a computer that executes the above-described series of processing according to a program.

In a computer 900 illustrated in Fig. 39, a central processing unit (CPU) 901, a read only memory (ROM) 902, and a random access memory (RAM) 903 are connected to one another via a bus 904.

An input/output interface 910 is also connected to the bus 904. An input unit 911, an output unit 912, a storage unit 913, a communication unit 914, and a drive 915 are connected to the input/output interface 910.

The input unit 911 is, for example, a keyboard, a mouse, a microphone, a touch panel, or an input terminal. The output unit 912 is, for example, a display, a speaker, or an output terminal. The storage unit 913 includes, for example, a hard disk, a RAM disk, and non-volatile memory. The communication unit 914 includes, for example, a network interface. The drive 915 drives a removable medium 921 such as a magnetic disk, an optical disc, a magneto-optical disk, or a semiconductor memory.

In the computer configured as described above, the CPU 901 loads a program stored in the storage unit 913 into the RAM 903 via the input/output interface 910 and the bus 904 and executes the program, so that the series of processing is performed. Data and the like necessary for the CPU 901 to execute the various kinds of processing is also stored as appropriate in the RAM 903.

The program executed by the computer can be recorded in, for example, the removable medium 921 as a package medium or the like and provided in such a form. In such a case, the program can be installed in the storage unit 913 via the input/output interface 910 by inserting the removable medium 921 into the drive 915.

This program can also be provided via wired or wireless transfer medium such as a local area network, the Internet, and digital satellite broadcasting. In such a case, the program can be received by the communication unit 914 and installed in the storage unit 913.

In addition, this program can be installed in advance in the ROM 902, the storage unit 913, or the like.

### <Application target of present technology>

The present technology can be applied to any desired configuration. For example, the present technology can be applied to a variety of electronic devices.

Additionally, for example, the present technology can be implemented as a configuration of a part of a device such as a processor (e.g., a video processor) of a system large scale integration (LSI) circuit, a module (e.g., a video module) using a plurality of processors or the like, a unit (e.g., a video unit) using a plurality of modules or the like, or a set (e.g., a video set) with other functions added to the unit.

For example, the present technology can also be applied to a network system configured with a plurality of devices. The present technology may be implemented as, for example, cloud computing for processing shared among a plurality of devices via a network. For example, the present technology may be implemented in a cloud service that provides services regarding images (moving images) to any terminals such as a computer, an audio visual (AV) device, a mobile information processing terminal, and an Internet-of-Things (IoT) device or the like.

In the present specification, a system means a set of a plurality of constituent elements (devices, modules (parts), or the like) and all the constituent elements may not be in the same casing. Accordingly, a plurality of devices accommodated in separate casings and connected via a network and a single device accommodating a plurality of modules in a single casing are all a system.

### <Fields and applications to which present technology is applicable>

A system, device, a processing unit, and the like to which the present technology is applied can be used in any field such as traffic, medical treatment, security, agriculture, livestock industries, a mining industry, beauty, factories, home appliance, weather, and natural surveillance, for example. Any purpose can be set.

### <Others>

Note that "flag" in the present specification is information for identifying a plurality of states and includes not only information used to identify two states of true (1) or false (0) but also information that allows identification of three or more states. Therefore, a value that can be indicated by "flag" may be, for example, a binary value of 1 or 0 or may be ternary or larger. In other words, the number of bits constituting "flag" may be any number, e.g., 1 bit or a plurality of bits. It is also assumed that the identification information (also including a flag) is included in a bitstream or the difference information of identification information with respect to certain reference information is included in a bitstream. Thus, "flag" and "identification information" in the present specification include not only the information but also the difference information with respect to the reference information.

Various kinds of information (such as metadata) related to coded data (bitstream) may be transmitted or recorded in any form as long as the information is associated with coded data. For example, the term "associate" means that when one data is processed, the other may be used (may be associated). In other words, mutually associated items of data may be integrated into one item of data or may be individual items of data. For example, information associated with coded data (image) may be transmitted through a transmission path that is different from that for the coded data (image). For example, the information associated with the coded data (image) may be recorded in a recording medium that is different from that for the coded data (image) (or a different recording area in the same recording medium). "Associate" may correspond to part of data instead of the entire data. For example, an image and information corresponding to the image may be associated with a plurality of frames, one frame, or any unit such as a part in the frame.

Meanwhile, in the present specification, terms such as "synthesize", "multiplex", "add", "integrate", "include", "store", "put in", "enclose", and "insert" may mean, for example, combining a plurality of objects into one, such as combining coded data and metadata into one piece of data, and mean one method of "associating" described above.

Embodiments of the present technology are not limited to the above-described embodiments and can be changed variously within the scope of the present technology without departing from the gist of the present technology.

For example, a configuration described as one device (or processing unit) may be split into and configured as a plurality of devices (or processing units). Conversely, configurations described above as a plurality of devices (or processing units) may be integrated and configured as one device (or processing unit). It is a matter of course that configurations other than the aforementioned configurations may be added to the configuration of each device (or each processing unit). Moreover, some of configurations of a certain device (or processing unit) may be included in a configuration of another device (or another processing unit) as long as the configurations and operations of the entire system are substantially identical to one another.

For example, the aforementioned program may be executed by any device. In this case, the device only needs to have necessary functions (such as functional blocks) to obtain necessary information.

Further, for example, each step of one flowchart may be executed by one device, or may be shared and executed by a plurality of devices. Further, when a plurality of processing are included in one step, one device may execute the plurality of processing, or the plurality of devices may share and execute the plurality of processing. In other words, it is also possible to execute the plurality of processing included in one step as processing of a plurality of steps. On the other hand, it is also possible to execute processing described as a plurality of steps collectively as one step.

Further, for example, in a program that is executed by a computer, processing of steps describing the program may be executed in time series in an order described in the present specification, or may be executed in parallel or individually at a required timing such as when call is made. That is, the processing of the respective steps may be executed in an order different from the above-described order as long as there is no contradiction. Further, the processing of the steps describing this program may be executed in parallel with processing of another program, or may be executed in combination with the processing of the other program.

Further, for example, a plurality of technologies regarding the present technology can be independently implemented as a single body as long as there is no contradiction. Of course, it is also possible to perform any plurality of the present technologies in combination. For example, it is also possible to implement some or all of the present technologies described in any of the embodiments in combination with some or all of the technologies described in other embodiments. Further, it is also possible to implement some or all of any of the above-described technologies in combination with other technologies not described above.

The present technology can also be configured as follows.
(1) An information processing device including: a low-definition vertex connection information generation unit that generates low-definition vertex connection information;
   a meta information coding unit that codes meta information including the low-definition vertex connection information;
   a geometry image generation unit that generates a geometry image by arranging patch images of a target mesh in frame images; and
   a geometry image coding unit that codes the geometry image,
   in which
   the low-definition vertex connection information is vertex connection information regarding vertexes and connections of a low-definition mesh, numbers of which are smaller than numbers of vertexes and connections of the target mesh,
   the low-definition mesh is 3D data that expresses a three-dimensional structure of an object by the vertexes and the connections,
   the target mesh is a target of coding, and
   the patch images express three-dimensional structures of a plurality of patches representing the divided low-definition mesh with two-dimensional coordinates on a projection plane and depth values from the projection plane.
(2) The information processing device according to (1), in which the low-definition vertex connection information includes information indicating the vertexes and the connections for each of the patches.
(3) The information processing device according to (2), in which the low-definition vertex connection information generation unit includes
   a patch dividing unit that divides the target mesh into a plurality of patches and generates original definition vertex connection information including information indicating the vertexes and the connections of the target mesh for each of the patches, and
   a definition reducing unit that generates the low-definition vertex connection information by reducing the number of vertexes for each of the patches of the original definition vertex connection information,
      and
   the geometry image generation unit generates the geometry image using the original definition vertex connection information.
(4) The information processing device according to (3), in which the definition reducing unit generates the low-definition vertex connection information by decimating the vertexes included in the original definition vertex connection information.
(5) The information processing device according to (4), in which the definition reducing unit executes patch boundary decimation and intra-patch decimation for each of the patches included in the original definition vertex connection information,
   the patch boundary decimation is processing of decimating the vertexes at boundaries of the plurality of divided patches, and
   the intra-patch decimation is processing of decimating the vertexes inside each of the patches.
(6) The information processing device according to (5), in which the definition reducing unit decimates the vertexes at the boundaries of the patches for each of vertex pairs as the patch boundary decimation,
   the vertex pairs are configured by the plurality of vertexes of the mutually different patches, and
   the plurality of vertexes are merged into one when the mesh is reconfigured.
(7) The information processing device according to any of (3) to (6), in which the definition reducing unit generates a subdividing parameter that is a parameter regarding subdividing of the patches of the low-definition vertex connection information, and
   the meta information coding unit codes the meta information including the subdividing parameter.
(8) The information processing device according to (7), in which the subdividing parameter includes a subdividing flag indicating whether to subdivide the patches of the low-definition vertex connection information.
(9) The information processing device according to (7) or (8), in which the subdividing parameter includes a subdividing rate indicating a ratio of numbers of polygons of the patches before and after the subdividing.
(10) The information processing device according to any of (7) to (9), in which the subdividing parameter includes a definition reducing rate indicating a ratio of numbers of polygons of the patches before and after definition reduction performed by the definition reducing unit.
(11) The information processing device according to any of (7) to (10), in which the subdividing parameter includes the number of times of subdividing repetition that designates the number of times the subdividing is repeated.
(12) The information processing device according to any of (7) to (11), in which the subdividing parameter includes a subdividing method that designates a method of the subdividing.
(13) The information processing device according to any of (7) to (12), in which the definition reducing unit generates the subdividing parameter on the basis of three-dimensional structures of the patches in the original definition vertex connection information.
(14) The information processing device according to any of (7) to (13), in which the definition reducing unit generates the subdividing parameter on the basis of how large distortion of the patches is before and after definition reduction of the original definition vertex connection information.
(15) The information processing device according to any of (3) to (14), in which the definition reducing unit generates a boundary subdividing flag that designates whether to subdivide boundaries of the patches, and
   the meta information coding unit codes the meta information including the boundary subdividing flag.
(16) The information processing device according to (15), in which the definition reducing unit
   appropriately executes patch boundary decimation and intra-patch decimation for each of the patches included in the original definition vertex connection information, and
   sets the boundary subdividing flag to true for the patches on which the patch boundary decimation has been executed,
   the patch boundary decimation is processing of decimating the vertexes of the boundaries of the patches, and
   the intra-patch decimation is processing of decimating the vertexes inside the patches.
(17) The information processing device according to (15) or (16), in which the definition reducing unit sets the boundary subdividing flag to true for the patches on which definition reduction has been performed such that definition reducing rates are equal to or greater than a predetermined threshold value, and
   the definition reducing rates indicate ratios of numbers of polygons of the patches before and after the definition reduction.
(18) The information processing device according to any of (3) to (17), in which the meta information coding unit
   decodes coded data of the meta information,
   subdivides the patches included in the low-definition vertex connection information included in the meta information and generates pair information indicating vertex pairs of the subdivided patches, and
   codes the meta information including the pair information,
   the vertex pairs are configured by the plurality of vertexes of the mutually different patches, and
   the plurality of vertexes are merged into one when the mesh is reconfigured.
(19) The information processing device according to any of (3) to (18), in which the geometry image generation unit executes dilation on a region where the patch images are not arranged in the geometry image.
(20) The information processing device according to any of (2), in which the low-definition vertex connection information generation unit includes
   a definition reducing unit that generates the low-definition mesh by reducing the number of the vertexes of the target mesh, and
   a patch dividing unit that divides the low-definition mesh into the patches and generates the low-definition vertex connection information,
      and
   the geometry image generation unit generates the geometry image using the target mesh and the low-definition vertex connection information.
(21) The information processing device according to (20), in which the definition reducing unit generates the low-definition mesh by decimating the vertexes of the target mesh.
(22) The information processing device according to (20) or (21), in which the definition reducing unit generates a boundary subdividing flag that designates whether to subdivide boundaries of the patches, and
   the meta information coding unit codes the meta information including the boundary subdividing flag.
(23) The information processing device according to (22), in which the definition reducing unit sets the boundary subdividing flag to true in a case where definition reduction is executed such that a definition reducing rate is equal to or greater than a predetermined value, and
   the definition reducing rate indicates a ratio of numbers of polygons between the target mesh and the low-definition mesh.
(24) The information processing device according to any of (20) to (23), in which the meta information coding unit
   decodes coded data of the meta information,
   subdivides the patches included in the low-definition vertex connection information included in the meta information and generates pair information indicating vertex pairs of the subdivided patches, and
   codes the meta information including the pair information,
   the vertex pairs are configured by the plurality of vertexes of the mutually different patches, and
   the plurality of vertexes are merged into one when the mesh is reconfigured.
(25) The information processing device according to any of (20) to (24), in which the geometry image generation unit
   replaces the depth value of a first patch image with a low definition with the depth value of a second patch image with an original definition on the basis of definition reduction information, and
   generates the geometry image by arranging the first patch image with the replaced depth value in the frame images,
   the first patch image is the patch image derived using the low-definition vertex connection information,
   the second patch image is the patch image derived using the target mesh, and
   the definition reduction information is information indicating a correspondence of polygons before and after definition reduction performed by the definition reducing unit.
(26) The information processing device according to any of (20) to (25), in which the geometry image generation unit
   replaces the depth value of a first patch image with a low definition with the depth value of a second patch image with an original definition in a vicinity in a three-dimensional coordinate system, and
   generates the geometry image by arranging the first patch image with the replaced depth value in the frame images,
   the first patch image is the patch image derived using the low definition vertex connection information, and
   the second patch image is the patch image derived using the target mesh.
(27) The information processing device according to any of (20) to (26), in which the geometry image generation unit
   replaces the depth value of a first patch image with a low definition with the depth value of a second patch image with an original definition in a vicinity in a two-dimensional coordinate system, and
   generates the geometry image by arranging the first patch image with the replaced depth value in the frame images,
   the first patch image is the patch image derived using the low definition vertex connection information, and
   the second patch image is the patch image derived using the target mesh.
(28) The information processing device according to (27), in which the geometry image generation unit dilates the second patch image in a case where the depth value in the vicinity in the two-dimensional coordinate system is not present.
(29) The information processing device according to (27) or (28), in which the geometry image generation unit skips the replacing of the depth values in a case where the depth value in the vicinity in the two-dimensional coordinate system is not present.
(30) The information processing device according to any of (27) to (29), in which the geometry image generation unit replaces the depth value of the first patch image with the depth value determined in advance in a case where the depth value in the vicinity in the two-dimensional coordinate system is not present.
(31) The information processing device according to any of (27) to (30), in which the geometry image generation unit generates an occupancy map indicating a range in which the depth value of the first patch image is able to be replaced, and the geometry image coding unit codes the occupancy map.
(32) The information processing device according to any of (20) to (31), in which the geometry image generation unit executes dilation on a region where the patch images are not arranged in the geometry image.
(33) The information processing device according to any of (1) to (32), in which the geometry image generation unit subdivides the patch images of the geometry image, derives the depth values of the vertexes, the number of which has been increased through the subdividing, and stores non-integer parts of the depth values in pixel values of the geometry image.
(34) The information processing device according to (33), in which the pixel values of the geometry image are configured by first bit lengths storing integer parts of the depth values and second bit lengths storing the non-integer parts of the depth values.
(35) The information processing device according to (33) or (34), in which the geometry image generation unit stores integer parts and the non-integer parts of the depth values in mutually different frame images of the geometry image.
(36) The information processing device according to any of (1) to (35), in which the geometry image generation unit subdivides the patch images of the geometry image, derives the depth values of the vertexes, the number of which has been increased through the subdividing, and stores non-integer depth value flags in pixels of the geometry image, and
   the non-integer depth value flags are flags indicating that the depth values are non-integers and are stored in pixels corresponding to the vertexes where the depth values are the non-integers.
(37) The information processing device according to (1), in which the low definition vertex connection information includes information indicating the vertexes and the connections in an entire low-definition mesh with a lower definition than a definition of the target mesh.
(38) The information processing device according to (37), in which the low-definition vertex connection information generation unit includes
   a definition reducing unit that generates the low-definition mesh by reducing the number of the vertexes of the target mesh, and
   a patch dividing unit that divides the low-definition mesh into the patches and generates the low-definition vertex connection information,
      and
   the geometry image generation unit generates the geometry image using the target mesh and the low-definition vertex connection information, and
   the meta information coding unit codes the meta information including the low-definition mesh.
(39) The information processing device according to (38), in which the geometry image generation unit generates arrangement information indicating positions where the patches of the low-definition mesh are arranged in the frame images, and
   the meta information coding unit codes the meta information including the arrangement information.
(40) An information processing method including: generating low-definition vertex connection information;
   coding meta information including the low-definition vertex connection information;
   generating a geometry image by arranging patch images of a target mesh in frame images; and
   coding the geometry image,
   wherein the low-definition vertex connection information is vertex connection information regarding vertexes and connections of a low-definition mesh,
   numbers of which are smaller than numbers of vertexes and connections of the target mesh,
   the low-definition mesh is 3D data that expresses a three-dimensional structure of an object by the vertexes and the connections,
   the target mesh is a target of coding, and
   the patch images express three-dimensional structures of a plurality of patches representing the divided low-definition mesh with two-dimensional coordinates on a projection plane and depth values from the projection plane.

(41) An information processing device including: a meta information decoding unit that decodes coded data of meta information including low-definition vertex connection information;
a geometry image decoding unit that decodes coded data of a geometry image in which patch images of a target mesh are arranged in frame images;
a patch reconfiguration unit that reconfigures the patch images using the low-definition vertex connection information and the geometry image;
a subdividing unit that subdivides polygons of the patch images obtained through the reconfiguration; and
a mesh reconfiguration unit that reconfigures a mesh using the patch images obtained through the subdividing,
in which
the low-definition vertex connection information is vertex connection information regarding vertexes and connections of a low-definition mesh, numbers of which are smaller than numbers of vertexes and connections of the target mesh,
the low-definition mesh is 3D data that expresses a three-dimensional structure of an object by the vertexes and the connections,
the target mesh is a target of coding, and
the patch images express three-dimensional structures of a plurality of patches representing the divided low-definition mesh with two-dimensional coordinates on a projection plane and depth values from the projection plane.

(42) The information processing device according to (41), in which the low-definition vertex connection information includes information indicating the vertexes and the connections for each of the patches.

(43) The information processing device according to (42), in which the patch reconfiguration unit applies a pixel value of a second pixel to which the depth value of the patch image has been applied to a first pixel to which the depth value has not been applied in the geometry image.

(44) The information processing device according to (43), in which the patch reconfiguration unit determines whether the depth value of the patch image has been applied on the basis of differences in pixel values from peripheral pixels.

(45) The information processing device according to (43) or (44), in which the patch reconfiguration unit determines whether the depth value of the patch image has been applied on the basis of a difference from a depth value at a same position in the patch image with a low definition derived using the low-definition vertex connection information.

(46) The information processing device according to any of (43) to (45), in which the patch reconfiguration unit determines whether the depth value of the patch image has been applied on the basis of the pixel value determined in advance.

(47) The information processing device according to any of (43) to (46), in which the patch reconfiguration unit determines whether the depth value of the patch image has been applied on the basis of an occupancy map.

(48) The information processing device according to any of (43) to (47), in which the patch reconfiguration unit applies the pixel value of the second pixel located at a closest position.

(49) The information processing device according to any of (43) to (48), in which the patch reconfiguration unit applies an average of the pixel values of a plurality of the second pixels in a vicinity.

(50) The information processing device according to (42), in which the subdividing unit applies a pixel value of a second pixel to which the depth value of a second patch image derived using the target mesh has been applied to a first pixel to which the depth value has not been applied in a first patch image obtained through the subdividing.

(51) The information processing device according to (50), in which the subdividing unit determines whether the depth value of the second patch image has been applied on the basis of differences in pixel values from peripheral pixels.

(52) The information processing device according to (50) or (51), in which the subdividing unit determines whether the depth value of the second patch image has been applied on the basis of a difference from a depth value at a same position in a third patch image derived using the low-definition vertex connection information.

(53) The information processing device according to any of (50) to (52), in which the subdividing unit determines whether the depth value of the second patch image has been applied on the basis of the pixel value determined in advance.

(54) The information processing device according to any of (50) to (53), in which the subdividing unit determines whether the depth value of the second patch image has been applied on the basis of an occupancy map.

(55) The information processing device according to any of (50) to (54), in which the subdividing unit applies a pixel value of the second pixel located at a closest position.

(56) The information processing device according to any of (50) to (55), in which the subdividing unit applies an average of pixel values of a plurality of the second pixels in a vicinity.

(57) The information processing device according to any of (42) to (56), in which the subdividing unit subdivides the boundaries of the patches in a case where boundary subdividing flags indicating whether to subdivide the boundaries included in the meta information are true.

(58) The information processing device according to any of (42) to (57), in which the subdividing unit applies a depth value in a region where the patch images are arranged as depth values of the vertexes located outside the region on the basis of an occupancy map indicating the region.

(59) The information processing device according to (58), in which the subdividing unit moves the vertexes located outside the region to inside of the region.

(60) The information processing device according to (58) or (59), in which the subdividing unit updates the depth values without moving the vertexes located outside the region.

(61) The information processing device according to any of (42) to (60), further including: a boundary vertex correction unit that corrects vertexes at boundaries of the patches of the mesh obtained through the reconfiguration.

(62) The information processing device according to (61), in which the boundary vertex correction unit corrects the vertexes through zippering and also searches for the vertexes in the zippering in a surface direction of the mesh.

(63) The information processing device according to (61) or (62), in which the boundary vertex correction unit processes two-dimensional coordinates of the vertexes, the number of which has increased through subdividing of the polygons of the patch images, as non-integer values.

(64) The information processing device according to any of (61) to (63), in which the boundary vertex correction unit corrects the vertexes using pair information included in the meta information, and
the pair information indicates vertex pairs configured by the plurality of vertexes of the mutually different patches.

(65) The information processing device according to any of (42) to (60), in which the mesh reconfiguration unit reconfigures the mesh using the patch images obtained through the reconfiguration,
the information processing device further includes a boundary vertex correction unit that corrects the vertexes at the boundaries of the patches of the mesh obtained through the reconfiguration, and
the subdividing unit subdivides the polygons of the mesh with the corrected vertexes at the boundaries.

(66) The information processing device according to (65), in which the boundary vertex correction unit further sets vertex pairs configured by the plurality of vertexes of the mutually different patches and sets positions of the vertexes configuring the vertex pairs after pairing using depth values of the vertexes at the boundaries.

(67) The information processing device according to any of (42) to (66), in which the subdividing unit subdivides the polygons of the patch images obtained through the reconfiguration in a three-dimensional coordinate system.

(68) The information processing device according to any of (42) to (67), in which the subdividing unit subdivides the polygons of the patch images obtained through the reconfiguration in a two-dimensional coordinate system.

(69) The information processing device according to (68), in which the subdividing unit derives the depth values that are non-integers using integer parts and non-integer parts of the depth values and subdivides the polygons using the derived depth values that are the non-integers.

(70) The information processing device according to (69), in which the subdividing unit acquires the integer parts and the non-integer parts of the depth values from the mutually different frame images of the geometry image.

(71) The information processing device according to any of (68) to (70), in which the subdividing unit omits generation of the vertexes at positions where non-integer depth value flags indicating that the depth values are non-integers are stored in the patch images in the subdividing.

(72) The information processing device according to any of (42) to (71), in which the subdividing unit executes the subdividing on the basis of a subdividing parameter that is a parameter included in the meta information and related to subdividing of the polygons of the patch images obtained through the reconfiguration.

(73) The information processing device according to (72), in which the subdividing parameter includes a subdividing flag indicating whether to execute the subdividing.

(74) The information processing device according to (72) or (73), in which the subdividing parameter includes a subdividing rate indicating a ratio of numbers of polygons of the patches before and after the subdividing.

(75) The information processing device according to any of (72) to (74), in which the subdividing parameter includes a definition reduction rate indicating a ratio of numbers of polygons of the patches before and after definition reduction executed at the time of coding.

(76) The information processing device according to any of (72) to (75), in which the subdividing parameter includes the number of times of subdividing repetition that designates the number of times the subdividing is repeated.

(77) The information processing device according to any of (72) to (76), in which the subdividing parameter includes a subdividing method that designates a method of the subdividing.

(78) The information processing device according to any of (42) to (77), in which the subdividing unit executes the subdividing on the basis of pixel values of the geometry image.

(79) The information processing device according to (78), in which the subdividing unit executes the subdividing in a case where gradients of the depth values in the polygons are equal to or greater than a predetermined threshold value.

(80) The information processing device according to (78) or (79), in which the subdividing unit executes the subdividing in a case where dispersion of the depth values in the polygons is equal to or greater than a predetermined threshold value.

(81) The information processing device according to (41), in which the low-definition vertex connection information includes information indicating the vertexes and the connections in the entire low-definition mesh with a lower definition than a definition of the target mesh, and
the patch reconfiguration unit divides the low-definition vertex connection information for each of the patches, derives positions of the patches in the geometry image, and extracts the patch images from the geometry image.

(82) The information processing device according to (81), in which the patch reconfiguration unit extracts the patch images from the geometry image on the basis of arrangement information indicating positions of the patches in the frame images included in the meta information.

(83) An information processing method including: decoding coded data of meta information including low-definition vertex connection information;
decoding coded data of a geometry image in which patch images of a target mesh are arranged in frame images;
reconfiguring the patch images using the low-definition vertex connection information and the geometry image;
subdividing polygons of the patch images obtained through the reconfiguration; and
reconfiguring a mesh using the patch images obtained through the subdividing, in which the low-definition vertex connection information is vertex connection information regarding vertexes and connections of a low-definition mesh,
numbers of which are smaller than numbers of vertexes and connections of the target mesh,
the low-definition mesh is 3D data that expresses a three-dimensional structure of an object by the vertexes and the connections,
the target mesh is a target of coding, and
the patch images express three-dimensional structures of a plurality of patches representing the divided low-definition mesh with two-dimensional coordinates on a projection plane and depth values from the projection plane.

### [Reference Signs List]

- 300: Coding device
- 311: Mesh voxelization unit
- 312: Patch dividing unit
- 313: Definition reducing unit
- 314: Meta information coding unit
- 315: Image generation unit
- 316: 2D coding unit
- 317: Image generation unit
- 318: 2D coding unit
- 319: Multiplexing unit
- 321: Low-definition vertex connection information generation unit
- 361: Mesh voxelization unit
- 362: Definition reducing unit
- 363: Patch dividing unit
- 364: Meta information coding unit
- 365: Image generation unit
- 366: 2D coding unit
- 367: Image generation unit
- 368: 2D coding unit
- 369: Multiplexing unit
- 371: Low-definition vertex connection information generation unit
- 400: Decoding device
- 411: Demultiplexing unit
- 412: Meta information decoding unit
- 413, 414: 2D decoding unit
- 415: Patch reconfiguration unit
- 416: Subdividing unit
- 417: Mesh reconfiguration unit
- 418: Boundary vertex correction unit
- 461: Patch dividing unit
- 462: Patch position deriving/unpacking unit
- 900: Computer

## Claims

1. An information processing device comprising:
a low-definition vertex connection information generation unit that generates low-definition vertex connection information;
a meta information coding unit that codes meta information including the low-definition vertex connection information;
a geometry image generation unit that generates a geometry image by arranging patch images of a target mesh in frame images; and
a geometry image coding unit that codes the geometry image,
wherein
the low-definition vertex connection information is vertex connection information regarding vertexes and connections of a low-definition mesh, numbers of which are smaller than numbers of vertexes and connections of the target mesh,
the low-definition mesh is 3D data that expresses a three-dimensional structure of an object by the vertexes and the connections,
the target mesh is a target of coding, and
the patch images express three-dimensional structures of a plurality of patches representing the divided low-definition mesh with two-dimensional coordinates on a projection plane and depth values from the projection plane.

2. The information processing device according to claim 1, wherein the low-definition vertex connection information includes information indicating the vertexes and the connections for each of the patches.

3. The information processing device according to claim 2,
wherein the low-definition vertex connection information generation unit includes
a patch dividing unit that divides the target mesh into a plurality of patches and generates original definition vertex connection information including information indicating the vertexes and the connections of the target mesh for each of the patches, and
a definition reducing unit that generates the low-definition vertex connection information by reducing the number of vertexes for each of the patches of the original definition vertex connection information,
and
the geometry image generation unit generates the geometry image using the original definition vertex connection information.

4. The information processing device according to claim 3,
wherein the definition reducing unit executes patch boundary decimation and intra-patch decimation for each of the patches included in the original definition vertex connection information,
the patch boundary decimation is processing of decimating the vertexes at boundaries of the plurality of divided patches, and
the intra-patch decimation is processing of decimating the vertexes inside each of the patches.

5. The information processing device according to claim 3,
wherein the definition reducing unit generates a subdividing parameter that is a parameter regarding subdividing of the patches of the low-definition vertex connection information, and
the meta information coding unit codes the meta information including the subdividing parameter.

6. The information processing device according to claim 2,
wherein the low-definition vertex connection information generation unit includes
a definition reducing unit that generates the low-definition mesh by reducing the number of the vertexes of the target mesh, and
a patch dividing unit that divides the low-definition mesh into the patches and generates the low-definition vertex connection information,
and
the geometry image generation unit generates the geometry image using the target mesh and the low-definition vertex connection information.

7. The information processing device according to claim 6,
wherein the geometry image generation unit
replaces the depth value of a first patch image with a low definition with the depth value of a second patch image with an original definition in the vicinity of the first patch image in a two-dimensional coordinate system, and
generates the geometry image by arranging the first patch image with the replaced depth value in the frame images,
the first patch image is the patch image derived using the low-definition vertex connection information, and
the second patch image is the patch image derived using the target mesh.

8. The information processing device according to claim 1, wherein the geometry image generation unit subdivides the patch images of the geometry image,
derives the depth values of the vertexes, the number of which has been increased through the subdividing, and stores non-integer parts of the depth values in pixel values of the geometry image.

9. The information processing device according to claim 1, wherein the low-definition vertex connection information includes information indicating the vertexes and the connections of an entire low-definition mesh with a lower definition than that of the target mesh.

10. An information processing method comprising:
generating low-definition vertex connection information;
coding meta information that includes the low-definition vertex connection information;
generating a geometry image by arranging patch images of a target mesh in frame images; and
coding the geometry image,
wherein the low-definition vertex connection information is vertex connection information regarding vertexes and connections of a low definition mesh,
numbers of which are smaller than numbers of vertexes and connections of the target mesh,
the low-definition mesh is 3D data that expresses a three-dimensional structure of an object by the vertexes and the connections,
the target mesh is a target of coding, and
the patch images express three-dimensional structures of a plurality of patches representing the divided low-definition mesh with two-dimensional coordinates on a projection plane and depth values from the projection plane.

11. An information processing device comprising:
a meta information decoding unit that decodes coded data of meta information including low-definition vertex connection information;
a geometry image decoding unit that decodes coded data of a geometry image in which patch images of a target mesh are arranged in frame images;
a patch reconfiguration unit that reconfigures the patch images using the low-definition vertex connection information and the geometry image;
a subdividing unit that subdivides polygons of the patch images obtained through the reconfiguration; and
a mesh reconfiguration unit that reconfigures a mesh using the subdivided patch images,
wherein
the low-definition vertex connection information is vertex connection information regarding vertexes and connections of a low definition mesh, numbers of which are smaller than numbers of vertexes and connections of the target mesh,
the low-definition mesh is 3D data that expresses a three-dimensional structure of an object by the vertexes and the connections,
the target mesh is a target of coding, and
the patch images express three-dimensional structures of a plurality of patches representing the divided low-definition mesh with two-dimensional coordinates on a projection plane and depth values from the projection plane.

12. The information processing device according to claim 11, wherein the low-definition vertex connection information includes information indicating the vertexes and the connections for each of the patches.

13. The information processing device according to claim 12, wherein the patch reconfiguration unit applies a pixel value of a second pixel to which the depth value of the patch image has been applied to a first pixel to which the depth value has not been applied in the geometry image.

14. The information processing device according to claim 12, wherein the subdividing unit applies a pixel value of a second pixel to which the depth value of a second patch image derived using the target mesh has been applied to a first pixel to which the depth value has not been applied in a first patch image obtained through the subdividing.

15. The information processing device according to claim 12, wherein the subdividing unit subdivides a boundary of the patches in a case where a boundary subdivision flag indicating whether to subdivide the boundary included in the meta information is true.

16. The information processing device according to claim 12, further comprising a boundary vertex correction unit that corrects vertexes at a boundary of the patches of the mesh obtained through the reconfiguration.

17. The information processing device according to claim 12, wherein the subdividing unit executes the subdividing on the basis of a subdividing parameter which is a parameter regarding subdividing of the polygons of the patch images obtained through the reconfiguration and included in the meta information.

18. The information processing device according to claim 12, wherein the subdividing unit executes the subdividing on the basis of pixel values of the geometry image.

19. The information processing device according to claim 11,
wherein the low-definition vertex connection information includes information indicating the vertexes and the connections of the entire low-definition mesh with a lower definition than that of the target mesh, and
the patch reconfiguration unit divides the low-definition vertex connection information for each of the patches, derives positions of the patches in the geometry image, and extracts the patch images from the geometry image.

20. An information processing method comprising:
decoding coded data of meta information that includes low-definition vertex connection information;
decoding coded data of a geometry image in which patch images of a target mesh are arranged in frame images;
reconstructing patch images using the low-definition vertex connection information and the geometry image;
subdividing polygons of the patch images obtained through the reconfiguration; and
reconfiguring a mesh using the patch images obtained through the subdividing,
wherein the low-definition vertex connection information is vertex connection information regarding vertexes and connections of a low-definition mesh,
numbers of which are smaller than numbers of vertexes and connections of the target mesh,
the low-definition mesh is 3D data that expresses a three-dimensional structure of an object by the vertexes and the connections,
the target mesh is a target of coding, and
the patch images express three-dimensional structures of a plurality of patches representing the divided low-definition mesh with two-dimensional coordinates on a projection plane and depth values from the projection plane.
